# EUROPEAN PATENT APPLICATION

(11) **EP 4 184 826 A1**
(43) Date of publication of application: **24.05.2023**
(21) Application number: 21851362.0
(22) Date of filing: 31.07.2021
(51) Int. Cl.: H04L 1/00, H04L 5/00, H04L 25/02

(54) **RETRANSMISSION METHOD AND APPARATUS**

(30) Priority: 31.07.2020 CN 202010761996; 08.02.2021 CN 202110170410
(71) Applicant: Huawei Technologies Co., Ltd., Longgang Shenzhen, Guangdong 518129 (CN)
(72) Inventor: YU, Yawei, Shenzhen, Guangdong 518129 (CN); GUO, Zhiheng, Shenzhen, Guangdong 518129 (CN)
(74) Representative: Gill Jennings & Every LLP
(86) International application number: PCT/CN2021/109940
(87) International publication number: WO 2022/022730

(57) **Abstract**

This application provides a data transmission method. The method may include: determining that a position of a start bit of a first bit sequence and a position of an end bit of a second bit sequence are contiguous in a coded bit sequence, where the first bit sequence is a bit sequence in first transmission, the second bit sequence is a bit sequence in second transmission, the first transmission and the second transmission carry a same transport block, and the second transmission is previous transmission of the first transmission; and receiving and/or sending the first bit sequence. In this application, a start position of the first bit sequence is selected, so that performance of combination decoding of a plurality of repetition transmissions can be ensured. This avoids a case that performance is affected because a part of information bits and/or check bits cannot be sent due to an excessively high transmission bit rate.

## Description

This application claims priorities to Chinese Patent Application No. 202010761996.3, filed with the China National Intellectual Property Administration on July 31, 2020 and entitled "REPETITION TRANSMISSION METHOD AND APPARATUS", and to Chinese Patent Application No. 202110170410.0, filed with the China National Intellectual Property Administration on February 8, 2021 and entitled "REPETITION TRANSMISSION METHOD AND APPARATUS", both of which are incorporated herein by reference in their entireties.

### TECHNICAL FIELD

This application relates to the communication field, and more specifically, to a repetition transmission method and an apparatus.

### BACKGROUND

In a wireless communication system, information exchanged between user equipment (user equipment, UE) and a base station (base station, or gNodeB, gNB) is carried on a physical channel. Therefore, data may be repeatedly transmitted and combination detection is performed, to improve channel estimation performance and data demodulation performance. In some deep coverage scenarios, such as cell edges or basements, a propagation path loss of a radio signal is severe. In this case, because a transmit power of the UE is usually low, for example, 23 dBm, and is far lower than a transmit power of the gNB (for example, a typical transmit power of a gNB with a bandwidth of 20 MHz is 46 dBm), a coverage enhancement means needs to be considered. This is particularly important for uplink transmission. A method for enhancing coverage performance is repeatedly sending data. For example, the UE repeatedly sends physical uplink shared channel (physical uplink shared channel, PUSCH) data, and the gNB performs combination detection on the repeatedly sent data. This can improve channel estimation performance and data demodulation performance, to improve a cell coverage capability.

However, in some scenarios, for example, in a new radio (new radio, NR) communication system, considering that repetition transmission is divided when a slot boundary is crossed or uplink data and downlink data are switched, an actual transmission bit rate is excessively high, and consequently, information bits cannot be completely transmitted. In addition, because few demodulation reference signals (Demodulation Reference Signals, DMRSs) are used in one independent channel estimation, channel estimation may be inaccurate, and after repetition transmission is divided, two independent channel estimations are performed in actual transmission. In addition, when a quantity of bits of a to-be-transmitted block is excessively small, a channel coding gain is small. This reduces decoding performance of current repetition transmission.

### SUMMARY

This application provides a repetition transmission method and an apparatus, to improve receiving and decoding performance of PUSCH repetition transmission.

According to a first aspect, a data transmission method is provided. The method includes: determining that a position of a start bit of a first bit sequence and a position of an end bit of a second bit sequence are contiguous in a coded bit sequence, where the first bit sequence is a bit sequence in first transmission, the second bit sequence is a bit sequence in second transmission, the first transmission and the second transmission carry a same transport block, and the second transmission is previous transmission of the first transmission.

In a design, the first transmission and the second transmission are two transmissions that are adjacent in terms of time, and the second transmission is prior to the first transmission.

According to the foregoing technical solution, it is determined, by selecting the position of the start bit of the first bit sequence in the coded bit sequence, that the position of the start bit of the first bit sequence and the position of the end bit of the second bit sequence are contiguous in the coded bit sequence. This can resolve a problem in an existing system that decoding may fail because a part of information bits and/or check bits in the coded bit sequence cannot be sent due to an excessively high actual transmission bit rate and selection performed from a predefined position in the coded bit sequence during repetition transmission. According to the foregoing technical solution, a probability of loss of information bits and check bits can be reduced as much as possible, and receiving and decoding performance of repetition transmission can be effectively ensured.

It should be understood that the configured quantity time domain unit used for repetition transmission is a quantity that is of time domain units occupied by each repetition transmission and that is configured by a network device for a terminal.

With reference to the first aspect, in some implementations of the first aspect, it is determined that at least one parameter in the first bit sequence is equal to that in the second bit sequence, where the parameter includes a power, precoding, and an antenna port.

According to the foregoing solution, channel estimation can be performed based on all demodulation reference signal (Demodulation reference signal, DMRS) time domain units in two repetition transmissions. In comparison with channel estimation performed in each repetition transmission by using a DMRS time domain unit in the current repetition transmission, more DMRS time domain units can be used to improve accuracy of channel estimation, thereby improving reliability of data demodulation and decoding of transmission.

With reference to the first aspect, in some implementations of the first aspect, when a time domain unit for the first transmission meets a first preset condition, it is determined that the position of the start bit of the first bit sequence and the position of the end bit of the second bit sequence are contiguous in the coded bit sequence; or when a time domain unit for the second transmission meets a second preset condition, it is determined that the position of the start bit of the first bit sequence and the position of the end bit of the second bit sequence are contiguous in the coded bit sequence.

With reference to the first aspect, in some implementations of the first aspect, an actual transmission bit rate of the first bit sequence in the first transmission is greater than or equal to a first preset threshold, and a ratio of a quantity of time domain units for the first transmission to a quantity of time domain units for one repetition transmission is greater than a second preset threshold, where the actual transmission bit rate of the first bit sequence in the first transmission is a product of a configured initial bit rate of a bit sequence transmitted in a time domain unit used for repetition transmission and a first ratio, the initial bit rate is a bit rate configured for the one repetition transmission, and the first ratio is a ratio of a configured quantity of time domain units for the one repetition transmission to the quantity of time domain units for the first transmission.

It should be understood that when the time domain unit includes a time domain unit occupied by a DMRS, the quantity of time domain units herein is a sum of a quantity of time domain units carrying a bit sequence and a quantity of time domain units occupied by the DMRS; or when the time domain unit does not include a time domain unit occupied by a DMRS, the quantity of time domain units herein is a quantity of time domain units carrying a bit sequence.

With reference to the first aspect, in some implementations of the first aspect, an actual transmission bit rate of the second bit sequence in the second transmission is greater than or equal to a third preset threshold, and a ratio of a quantity of time domain units for the second transmission to a configured quantity of time domain units for one repetition transmission is less than or equal to a fourth preset threshold, where the actual transmission bit rate of the second bit sequence in the second transmission is a product of a configured initial bit rate of a bit sequence transmitted in a time domain unit used for repetition transmission and a second ratio, the initial bit rate is a bit rate configured for the one repetition transmission, and the second ratio is a ratio of the quantity of time domain units for the second transmission to the configured quantity of time domain units for the one repetition transmission.

It should be understood that when the time domain unit includes a time domain unit occupied by a DMRS, the quantity of time domain units herein is a sum of a quantity of time domain units carrying a bit sequence and a quantity of time domain units occupied by the DMRS; or when the time domain unit does not include a time domain unit occupied by a DMRS, the quantity of time domain units herein is a quantity of time domain units carrying a bit sequence.

With reference to the first aspect, in some implementations of the first aspect, indication information is sent, where the indication information indicates that the position of the start bit of the first bit sequence and the position of the end bit of the second bit sequence are contiguous in the coded bit sequence.

With reference to the first aspect, in some implementations of the first aspect, downlink control information DCI is sent, where the DCI includes the indication information. When the quantity of time domain units for the first transmission meets the first preset condition, and/or the quantity of time domain units for the second transmission meets the second preset condition, information in the DCI indicates to perform repetition transmission in a form in which the position of the start bit of the first bit sequence and the position of the end bit of the second bit sequence are contiguous in the coded bit sequence. The information may be a newly added field, or may be redundancy state values of an existing field, for example, state values 29 to 31 (reserved bits) indicated by a modulation and coding scheme.

With reference to the first aspect, in some implementations of the first aspect, radio resource control RRC signaling is sent, where the RRC signaling includes the indication information.

According to a second aspect, a data transmission method is provided. The method includes: determining that a position of a start bit of a first bit sequence and a position of an end bit of a second bit sequence are contiguous in a coded bit sequence, where the first bit sequence is a bit sequence in first transmission, the second bit sequence is a bit sequence in second transmission, the first transmission and the second transmission carry a same transport block, and the second transmission is previous transmission of the first transmission; and receiving and/or sending the first bit sequence.

According to the foregoing solution, it is determined that the position of the start bit of the first bit sequence and the position of the end bit of the second bit sequence are contiguous in the coded bit sequence. This can resolve a problem that decoding may fail because a part of information bits and/or check bits cannot be sent due to an excessively high actual transmission bit rate of repetition transmission and selection of a to-be-transmitted bit from a predefined position in the coded bit sequence during repetition transmission.

With reference to the second aspect, in some implementations of the second aspect, it is determined that at least one parameter in the first bit sequence is equal to that in the second bit sequence, where the parameter includes a power, precoding, and an antenna port.

According to the foregoing solution, channel estimation can be performed based on all DMRS time domain units in two repetition transmissions. In comparison with channel estimation performed in each repetition transmission by using a DMRS time domain unit in the current repetition transmission, more DMRS time domain units can be used to improve accuracy of channel estimation, thereby improving reliability of data demodulation and decoding of transmission.

With reference to the second aspect, in some implementations of the second aspect, indication information is received, where the indication information indicates that the position of the start bit of the first bit sequence and the position of the end bit of the second bit sequence are contiguous in the coded bit sequence. The determining that a position of a start bit of a first bit sequence and a position of an end bit of a second bit sequence are contiguous in a coded bit sequence includes: determining, based on the indication information, that the position of the start bit of the first bit sequence and the position of the end bit of the second bit sequence are contiguous in the coded bit sequence.

With reference to the second aspect, in some implementations of the second aspect, DCI is received, where the DCI includes the indication information. When the quantity of time domain units for the first transmission meets the first preset condition, and/or the quantity of time domain units for the second transmission meets the second preset condition, information in the DCI indicates to perform repetition transmission in a form in which the position of the start bit of the first bit sequence and the position of the end bit of the second bit sequence are contiguous in the coded bit sequence. The information may be a newly added field, or may be redundancy state values of an existing field, for example, state values 29 to 31 (reserved bits) indicated by a modulation and coding scheme.

With reference to the second aspect, in some implementations of the second aspect, RRC signaling is received, where the RRC signaling includes the indication information.

According to a third aspect, a data transmission method is provided. The method includes: determining that a first to-be-coded block includes at least two second to-be-coded blocks, where each of the at least two second to-be-coded blocks is a to-be-coded block transmitted in one time domain unit used for repetition transmission; performing channel coding and rate matching on the first to-be-coded block to obtain a bit sequence; and receiving and/or sending the bit sequence.

According to the foregoing technical solution, the at least two second to-be-coded blocks are combined into a larger to-be-coded block, and channel coding and rate matching are performed on the larger to-be-coded block. In comparison with independent channel coding originally performed on each of the at least two second to-be-coded blocks, a better channel coding gain can be obtained by performing channel coding on the larger to-be-coded block obtained after the combination. A transmission bit rate of the to-be-coded block obtained after the combination is determined. After channel coding and rate matching, repetition transmission is performed in a time domain unit, used for repetition transmission, of the original at least two second to-be-coded blocks. In this way, decoding and demodulation performance of repetition transmission can be improved by using the obtained channel coding gain.

With reference to the third aspect, in some implementations of the third aspect, when a quantity of bits of the second to-be-coded block meets a first preset condition, after channel coding and rate matching are performed on the first to-be-coded block, repetition transmission is performed in a plurality of time domain units.

With reference to the third aspect, in some implementations of the third aspect, the first preset condition is that a maximum quantity of bits of a to-be-coded block in the at least two second to-be-coded blocks is less than or equal to a first preset threshold.

With reference to the third aspect, in some implementations of the third aspect, the first preset condition is that a sum of quantities of bits of the at least two second to-be-coded blocks is less than or equal to a second preset threshold.

With reference to the third aspect, in some implementations of the third aspect, first indication information is sent, where the first indication information indicates that the bit sequence is a bit sequence obtained by performing channel coding and rate matching on the first to-be-coded block.

With reference to the third aspect, in some implementations of the third aspect, first DCI is sent, where the first DCI includes the first indication information. 1-bit information in the DCI indicates that the bit sequence is a bit sequence obtained by performing channel coding and rate matching on the first to-be-coded block. The 1-bit information may be a newly added field, or may be redundancy state values of an existing field, for example, state values 29 to 31 (reserved bits) indicated by a modulation and coding scheme.

With reference to the third aspect, in some implementations of the third aspect, first RRC signaling is sent, where the first RRC signaling includes the first indication information.

With reference to the third aspect, in some implementations of the third aspect, it is determined that a position of a start bit of a first bit sequence and a position of an end bit of a second bit sequence are contiguous in a coded bit sequence, where the first bit sequence is a bit sequence in first transmission, the second bit sequence is a bit sequence in second transmission, the first transmission and the second transmission carry a same transport block, and the second transmission is previous transmission of the first transmission.

With reference to the third aspect, in some implementations of the third aspect, when a quantity of time domain units for the first transmission meets a second preset condition, it is determined that the position of the start bit of the first bit sequence and the position of the end bit of the second bit sequence are contiguous in the coded bit sequence; and/or when a quantity of time domain units for the second transmission meets a third preset condition, it is determined that the position of the start bit of the first bit sequence and the position of the end bit of the second bit sequence are contiguous in the coded bit sequence.

With reference to the third aspect, in some implementations of the third aspect, the second preset condition is that an actual transmission bit rate of the first bit sequence in the first transmission is greater than or equal to a first preset threshold, and a ratio of the quantity of time domain units for the first transmission to a quantity of time domain units for one repetition transmission is greater than a second preset threshold, where the actual transmission bit rate of the first bit sequence in the first transmission is a product of a configured initial bit rate of a bit sequence transmitted in a time domain unit used for repetition transmission and a first ratio, the initial bit rate is a bit rate configured for the one repetition transmission, and the first ratio is a ratio of a configured quantity of time domain units for the one repetition transmission to the quantity of time domain units for the first transmission.

It should be understood that when the time domain unit includes a time domain unit occupied by a DMRS, the quantity of time domain units herein is a sum of a quantity of time domain units carrying a bit sequence and a quantity of time domain units occupied by the DMRS; or when the time domain unit does not include a time domain unit occupied by a DMRS, the quantity of time domain units herein is a quantity of time domain units carrying a bit sequence.

With reference to the third aspect, in some implementations of the third aspect, the third preset condition is that an actual transmission bit rate of the second bit sequence in the second transmission is greater than or equal to a third preset threshold, and a ratio of the quantity of time domain units for the second transmission to a configured quantity of time domain units for one repetition transmission is less than or equal to a fourth preset threshold, where the actual transmission bit rate of the second bit sequence in the second transmission is a product of a configured initial bit rate of a bit sequence transmitted in a time domain unit used for repetition transmission and a second ratio, the initial bit rate is a bit rate configured for the one repetition transmission, and the second ratio is a ratio of the quantity of time domain units for the second transmission to the configured quantity of time domain units for the one repetition transmission.

It should be understood that when the time domain unit includes a time domain unit occupied by a DMRS, the quantity of time domain units herein is a sum of a quantity of time domain units carrying a bit sequence and a quantity of time domain units occupied by the DMRS; or when the time domain unit does not include a time domain unit occupied by a DMRS, the quantity of time domain units herein is a quantity of time domain units carrying a bit sequence.

With reference to the third aspect, in some implementations of the third aspect, second indication information is sent, where the second indication information indicates that the position of the start bit of the first bit sequence and the position of the end bit of the second bit sequence are contiguous in the coded bit sequence.

With reference to the third aspect, in some implementations of the third aspect, second DCI is sent, where the second DCI includes the second indication information. When the quantity of time domain units for the first transmission meets the second preset condition, and/or the quantity of time domain units for the second transmission meets the third preset condition, 1-bit information in the second DCI indicates to perform repetition transmission in a form in which the position of the start bit of the first bit sequence and the position of the end bit of the second bit sequence are contiguous in the coded bit sequence. The 1-bit information may be a newly added field, or may be redundancy state values of an existing field, for example, state values 29 to 31 (reserved bits) indicated by a modulation and coding scheme.

With reference to the third aspect, in some implementations of the third aspect, second RRC signaling is sent, where the second RRC signaling includes the second indication information.

According to a fourth aspect, a data transmission method is provided. The method includes:
receiving first indication information, where the first indication information indicates that a sequence received and/or sent in a plurality of time domain units is a sequence obtained after channel coding and rate matching are performed on a first to-be-coded block, the first to-be-coded block includes at least two second to-be-coded blocks, and each of the at least two second to-be-coded blocks is a to-be-coded block transmitted in a time domain unit used for repetition transmission; receiving and/or sending the sequence; and performing channel decoding on the sequence based on the first indication information.

According to the foregoing technical solution, the sequence obtained after channel coding and rate matching are performed on the first to-be-coded block is received and/or sent in the plurality of time domain units, where the first to-be-coded block includes at least two second to-be-coded blocks, and each of the at least two second to-be-coded blocks is a to-be-coded block transmitted in one time domain unit used for repetition transmission; and unified channel decoding is performed on a first bit sequence. This can improve a transmission capability of a system.

With reference to the fourth aspect, in some implementations of the fourth aspect, first DCI is received, where the first DCI includes the first indication information. 1-bit information in the DCI indicates that the bit sequence is a bit sequence obtained by performing channel coding and rate matching on the first to-be-coded block. The 1-bit information may be a newly added field, or may be redundancy state values of an existing field, for example, state values 29 to 31 (reserved bits) indicated by a modulation and coding scheme.

With reference to the fourth aspect, in some implementations of the fourth aspect, first RRC signaling is received, where the first RRC signaling includes the first indication information.

With reference to the fourth aspect, in some implementations of the fourth aspect, second indication information is received, where the second indication information indicates that a position of a start bit of the first bit sequence and a position of an end bit of a second bit sequence are contiguous in a coded bit sequence, where the first bit sequence is a bit sequence in first transmission, the second bit sequence is a bit sequence in second transmission, the first transmission and the second transmission carry a same transport block, and the second transmission is previous transmission of the first transmission; it is determined, based on the second indication information, that the position of the start bit of the first bit sequence and the position of the end bit of the second bit sequence are contiguous in the coded bit sequence; and the sequence obtained after channel coding and rate matching are performed on the first to-be-coded block is received and/or sent in the plurality of time domain units.

With reference to the fourth aspect, in some implementations of the fourth aspect, second DCI is received, where the second DCI includes the second indication information. 1-bit information in the DCI indicates to perform repetition transmission in a form in which the position of the start bit of the first bit sequence and the position of the end bit of the second bit sequence are contiguous in the coded bit sequence. The 1-bit information may be a newly added field, or may be redundancy state values of an existing field, for example, state values 29 to 31 (reserved bits) indicated by a modulation and coding scheme.

With reference to the fourth aspect, in some implementations of the fourth aspect, second RRC signaling is received, where the second RRC signaling includes the second indication information.

According to a fifth aspect, a data transmission method is provided. The method includes: determining that at least one parameter in a first bit sequence is equal to that in a second bit sequence, where the parameter includes a power, precoding, and an antenna port, the first bit sequence is a bit sequence in first transmission, the second bit sequence is a bit sequence in second transmission, the first transmission and the second transmission carry a same transport block, and the second transmission is previous transmission of the first transmission; and receiving and/or sending the first bit sequence.

According to the foregoing solution, it is determined that at least one parameter in the first bit sequence is equal to that in the second bit sequence, where the parameter includes a power, precoding, and an antenna port. Channel estimation can be performed based on all DMRS time domain units in two repetition transmissions. In comparison with channel estimation performed in each repetition transmission by using a DMRS time domain unit in the current repetition transmission, more DMRS time domain units can be used to improve accuracy of channel estimation, thereby improving reliability of data demodulation and decoding of transmission.

With reference to the fifth aspect, in some implementations of the fifth aspect, when a quantity of time domain units for the first transmission meets a fourth preset condition, it is determined that at least one parameter in the first bit sequence is equal to that in the second bit sequence; or when a quantity of time domain units for the second transmission meets a fifth preset condition, it is determined that at least one parameter in the first bit sequence is equal to that in the second bit sequence.

With reference to the fifth aspect, in some implementations of the fifth aspect, the fourth preset condition is at least one of the following conditions: An actual transmission bit rate of the first bit sequence in the first transmission is greater than or equal to a first preset threshold, and a ratio of the quantity of time domain units for the first transmission to a quantity of time domain units for one repetition transmission is greater than a second preset threshold, where the actual transmission bit rate of the first bit sequence in the first transmission is a product of a configured initial bit rate of a bit sequence transmitted in a time domain unit used for repetition transmission and a first ratio, the initial bit rate is a bit rate configured for the one repetition transmission, and the first ratio is a ratio of a configured quantity of time domain units for the one repetition transmission to the quantity of time domain units for the first transmission.

It should be understood that when the time domain unit includes a time domain unit occupied by a DMRS, the quantity of time domain units herein is a sum of a quantity of time domain units carrying a bit sequence and a quantity of time domain units occupied by the DMRS; or when the time domain unit does not include a time domain unit occupied by a DMRS, the quantity of time domain units herein is a quantity of time domain units carrying a bit sequence.

With reference to the fifth aspect, in some implementations of the fifth aspect, the fifth preset condition is at least one of the following conditions: An actual transmission bit rate of the second bit sequence in the second transmission is greater than or equal to a third preset threshold, and a ratio of the quantity of time domain units for the second transmission to a configured quantity of time domain units for one repetition transmission is less than or equal to a fourth preset threshold, where the actual transmission bit rate of the second bit sequence in the second transmission is a product of a configured initial bit rate of a bit sequence transmitted in a time domain unit used for repetition transmission and a second ratio, the initial bit rate is a bit rate configured for the one repetition transmission, and the second ratio is a ratio of the quantity of time domain units for the second transmission to the configured quantity of time domain units for the one repetition transmission.

It should be understood that when the time domain unit includes a time domain unit occupied by a DMRS, the quantity of time domain units herein is a sum of a quantity of time domain units carrying a bit sequence and a quantity of time domain units occupied by the DMRS; or when the time domain unit does not include a time domain unit occupied by a DMRS, the quantity of time domain units herein is a quantity of time domain units carrying a bit sequence.

According to a sixth aspect, a data transmission method is provided. The method includes: determining that at least one parameter in a first bit sequence is equal to that in a second bit sequence, where the parameter includes a power, precoding, and an antenna port, a position of a start bit of the first bit sequence and a position of an end bit of the second bit sequence are contiguous in a coded bit sequence, the first bit sequence is a bit sequence in first transmission, the second bit sequence is a bit sequence in second transmission, the first transmission and the second transmission carry a same transport block, and the second transmission is previous transmission of the first transmission; and receiving and/or sending the first bit sequence.

According to the foregoing solution, it is determined that at least one parameter in the first bit sequence is equal to that in the second bit sequence, where the parameter includes a power, precoding, and an antenna port. Channel estimation can be performed based on all DMRS time domain units in two repetition transmissions. In comparison with channel estimation performed in each repetition transmission by using a DMRS time domain unit in the current repetition transmission, more DMRS time domain units can be used to improve accuracy of channel estimation, thereby improving reliability of data demodulation and decoding of transmission.

According to a seventh aspect, a data transmission apparatus is provided. The data transmission apparatus is configured to perform the data transmission methods provided in the first aspect to the sixth aspect. Specifically, the data transmission apparatus may include modules configured to perform the data transmission methods provided in the first aspect to the sixth aspect.

According to an eighth aspect, a data transmission apparatus is provided. The data transmission apparatus includes a processor. The processor is coupled to a memory, and may be configured to execute instructions in the memory, to implement the data transmission method according to any one of the first aspect to the sixth aspect and the possible implementations of the first aspect to the sixth aspect. Optionally, the data transmission apparatus further includes the memory. Optionally, the data transmission apparatus further includes a communication interface, the processor is coupled to the communication interface, and the communication interface is configured to input and/or output information. The information includes at least one of: the instructions and data.

In an implementation, the data transmission apparatus is a network device. When the data transmission apparatus is a network device, the communication interface may be a transceiver or an input/output interface.

In another implementation, the data transmission apparatus is a chip or a chip system. When the data transmission apparatus is a chip or a chip system, the communication interface may be an input/output interface, an interface circuit, an output circuit, an input circuit, a pin, a related circuit, or the like on the chip or the chip system. The processor may alternatively be a processing circuit or a logic circuit.

In another implementation, the data transmission apparatus is a chip or a chip system disposed in a network device.

Optionally, the transceiver may be a transceiver circuit. Optionally, the input/output interface may be an input/output circuit.

According to a ninth aspect, a computer-readable storage medium is provided. The computer-readable storage medium stores a computer program. When the computer program is executed by a communication apparatus, the communication apparatus is enabled to implement the data transmission method according to any one of the first aspect to the sixth aspect and the possible implementations of the first aspect to the sixth aspect.

According to an tenth aspect, a computer program product including instructions is provided. When the instructions are executed by a computer, a communication apparatus is enabled to implement the data transmission methods provided in the first aspect to the sixth aspect.

### BRIEF DESCRIPTION OF DRAWINGS

FIG. 1 is a schematic diagram of a wireless communication system 100 applicable to an embodiment of this application;
FIG. 2 is a schematic diagram of time domain resource allocation for PUSCH repetition sending;
FIG. 3 is a schematic diagram of PUSCH repetition sending across a slot boundary;
FIG. 4 is a schematic diagram of an RV cycle of PUSCH repetition sending across a slot boundary;
FIG. 5 is a schematic diagram of RV number and start point selection after LDPC coding;
FIG. 6 is a schematic diagram of PUSCH repetition transmission across a slot boundary;
FIG. 7 is a schematic flowchart of an example of a data repetition transmission method applicable to this application;
FIG. 8 is a schematic diagram of an example of determining a start point of a bit sequence in repetition transmission applicable to this application;
FIG. 9 is a schematic diagram of another example of determining a start point of a bit sequence in repetition transmission applicable to this application;
FIG. 10 is a schematic flowchart of another example of a repetition transmission method applicable to this application;
FIG. 11 is a schematic diagram of repetition transmission in a plurality of slots after to-be-transmitted blocks are combined, where the repetition transmission is applicable to this application;
FIG. 12 is a schematic flowchart of another example of a data repetition transmission method applicable to this application;
FIG. 13 is a schematic flowchart of another example of a data repetition transmission method applicable to this application;
FIG. 14 is a schematic flowchart of another example of a data repetition transmission method applicable to this application;
FIG. 15 is a schematic flowchart of another example of a data repetition transmission method applicable to this application;
FIG. 16 is a schematic block diagram of a communication apparatus applicable to an embodiment of this application;
FIG. 17 is a schematic diagram of an architecture of a communication apparatus applicable to an embodiment of this application;
FIG. 18 is a schematic diagram of a structure of a communication apparatus applicable to an embodiment of this application; and
FIG. 19 is a schematic diagram of an architecture of a communication apparatus applicable to an embodiment of this application.

### DESCRIPTION OF EMBODIMENTS

The technical solutions in embodiments of this application are applicable to various communication systems, for example, a 5th generation (5th generation, 5G) system or an NR system, a long term evolution (long term evolution, LTE) system, an LTE frequency division duplex (frequency division duplex, FDD) system, an LTE time division duplex (time division duplex, TDD) system, and a universal mobile telecommunication system (universal mobile telecommunication system, UMTS).

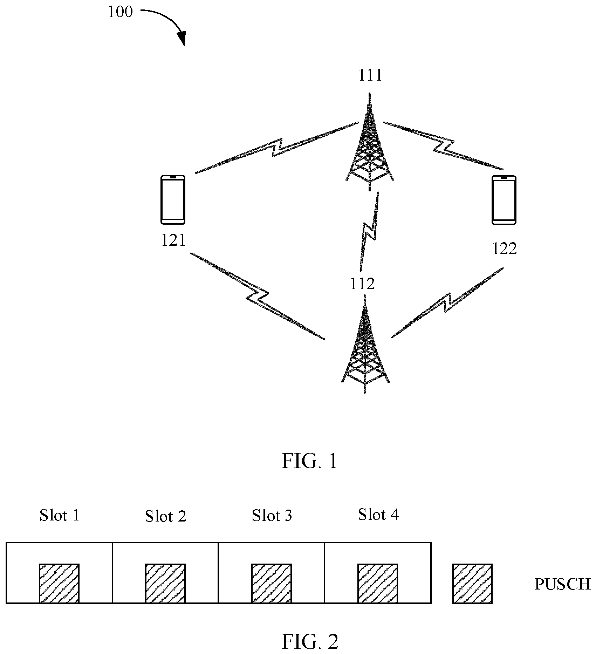

FIG. 1 is a schematic diagram of a wireless communication system 100 applicable to an embodiment of this application. As shown in FIG. 1, the wireless communication system 100 may include at least one terminal device, for example, a terminal device 121 and a terminal device 122 in FIG. 1; and the wireless communication system 100 may further include a plurality of network devices, for example, a network device 111 and a network device 112 in FIG. 1. The terminal device 121 in FIG. 1 may simultaneously communicate with the terminal device 122, the network device 111, and the network device 112, and the network device 111 may simultaneously communicate with the terminal device 121, the terminal device 122, and the network device 112. A plurality of antennas may be configured for each of the network device and the terminal device. The network device and the terminal device may communicate with each other by using a multi-antenna technology.

It should be understood that FIG. 1 is merely an example for description, and this application is not limited thereto.

It should be understood that the network device in the wireless communication system may be any device that has a wireless transceiver function. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a Home evolved NodeB, or a Home NodeB, HNB), a baseband unit (Baseband Unit, BBU), an access point (Access Point, AP) in a wireless fidelity (Wireless Fidelity, Wi-Fi) system, a wireless relay node, a wireless backhaul node, a transmission point (transmission point, TP), a transmission and reception point (transmission and reception point, TRP), or the like. The device may alternatively be a gNB or a transmission point (TRP or TP) in a 5G system, for example, an NR system, or one or a group of antenna panels (including a plurality of antenna panels) of a base station in the 5G system, or the device may be a network node that constitutes a gNB or a transmission point, for example, a baseband unit (BBU) or a distributed unit (distributed unit, DU).

In some deployment, the gNB may include a central unit (central unit, CU) and a DU. The gNB may further include an active antenna unit (active antenna unit, AAU for short). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

For ease of understanding of embodiments of this application, the following first briefly describes several terms in this application.

### 1. Redundancy version

Redundancy version: The redundancy version is designed to implement incremental redundancy (Incremental redundancy, IR) hybrid automatic repeat request (Hybrid Automatic Repeat Request, HARQ) transmission. To be specific, redundant bits generated by an encoder are divided into several groups, each RV defines a transmission start point, and different RVs are used for initial transmission and each HARQ retransmission, to implement gradual accumulation of redundant bits and complete an incremental redundancy HARQ operation. In an LTE research process, two RV quantities have been considered: 4 and 8. After discussion, it is determined that four RVs are used. A definition of the RV is related to a size of a soft buffer (Soft Buffer). The smaller of a circular buffer at a transmit end and a soft buffer at a receive end is selected, and the four RVs are evenly distributed in this range.

### 2. Low-density parity-check code

A low-density parity-check (Low Density Parity Coding, LDPC) code is a linear block code having a sparse check matrix. The low-density parity-check code not only has good performance close to the Shannon limit, but also has low decoding complexity and a flexible structure.

Decoding algorithms of the LDPC code include three types: hard decision decoding, soft decision decoding, and hybrid decoding.
(1) In hard decision decoding, a received real-number sequence is demodulated by using a demodulator, and then hard decision is performed to obtain a hard decision sequence including 0 and 1. Finally, the obtained hard decision sequence is transmitted to a hard decision decoder for decoding. Calculation complexity of this manner is very low, but a hard decision operation causes a loss of most channel information. This results in very low channel information utilization. Channel information utilization and decoding complexity of hard decision decoding are the lowest in the three types of decoding. Common hard decision decoding algorithms include a bit-flipping (bit-flipping, BF) algorithm and a one-step majority-logic (one-step majority-logic, OSMLG) decoding algorithm.
(2) Soft decision decoding may be considered as infinite-bit quantization decoding. Received channel information (soft information) is fully used, so that channel information utilization is greatly improved. The channel information used in soft decision decoding includes not only a symbol of the channel information, but also an amplitude value of the channel information. The full use of the channel information greatly improves decoding performance, so that decoding can be iteratively performed, the received channel information is fully mined, and finally excellent bit error performance is obtained. Channel information utilization and decoding complexity of soft decision decoding are the highest in the three types of decoding. A most common soft decision decoding algorithm is a sum-product decoding algorithm, which is also referred to as a belief propagation (belief propagation, BP) algorithm.
(3) In comparison with the foregoing hard decision decoding and soft decision decoding, hybrid decoding combines features of soft decision decoding and hard decision decoding, and is a reliability-based decoding algorithm. Based on hard decision decoding, hybrid decoding uses partial channel information to calculate reliability. Common hybrid decoding algorithms include a weighted bit-flipping (weighted BF, WBF) algorithm and a weighted OSMLG (weighted OSMLG, WMLG) decoding algorithm.

### 3. Transport block

A transport block (Transport block, TB) is a data block including a MAC PDU. The data block is transmitted in a TTI and is also a unit in HARQ retransmission. According to LTE specifications, each terminal can send a maximum of two transport blocks in one TTI. This is specific to UE. For an eNodeB, more than two transport blocks are scheduled in each TTI because a plurality of UEs can be scheduled at the same time. The TB is a concept of MAC.

### 4. Slot

Slot (slot): In NR, a slot is a minimum scheduling unit of time. A slot format includes 14 orthogonal frequency division multiplexing (Orthogonal Frequency Division Multiplexing, OFDM) symbols, and a CP of each OFDM symbol is a normal CP (normal CP). A slot format includes 12 OFDM symbols, and a CP of each OFDM symbol is an extended CP (extended CP). A slot format includes seven OFDM symbols, and a CP of each OFDM symbol is a normal CP. In one slot, all OFDM symbols may be used for uplink transmission, all OFDM symbols may be used for downlink transmission, or a part of OFDM symbols may be used for downlink transmission, a part of OFDM symbols may be used for uplink transmission, and a part of OFDM symbols may be reserved and not be used for transmission. It should be understood that the foregoing examples are merely examples for description, and should not constitute any limitation on this application. In consideration of system forward compatibility, a slot format is not limited to the foregoing examples.

5. Time-frequency resource: In embodiments of this application, data or information may be carried by using a time-frequency resource. The time-frequency resource may include a time domain resource and a frequency domain resource. In time domain, the time-frequency resource may include one or more time domain units (which may also be referred to as time domain units). In frequency domain, the time-frequency resource may include a frequency domain unit.

One time domain unit (which may also be referred to as a time domain unit) may be one symbol or several symbols, one mini-slot (mini-slot), one slot (slot), or one subframe (subframe). Duration of one subframe in time domain may be 1 millisecond (ms), one slot includes seven or 14 symbols, and one mini-slot may include at least one symbol (for example, two symbols, seven symbols, 14 symbols, or any quantity of symbols less than or equal to 14 symbols). The listed sizes of the time domain unit are merely for ease of understanding of the solutions in this application, and should not be understood as a limitation on this application. It may be understood that the size of the time domain unit may have another value. This is not limited in this application.

One frequency domain unit may be one resource block (resource block, RB), one resource block group (resource block group, RBG), or one predefined subband (subband).

### 6. Demodulation reference signal

The demodulation reference signal (Demodulation Reference Signal, DMRS) is used for uplink and downlink data demodulation in a data transmission process.

In a wireless communication system, for example, in an NR communication system, information exchanged between UE and a gNB is carried on a physical channel. Data sent by the UE, that is, uplink data, is usually carried on a PUSCH. Control information sent by the UE, that is, uplink control information, is usually carried on a physical uplink control channel (physical uplink control channel, PUCCH). In addition, the UE may further send a sounding reference signal (sounding reference signal, SRS), and the gNB may estimate channel quality of the UE at different frequencies by receiving the SRS of the UE.

For example, for an uplink SRS, a current NR protocol supports different quantities of repetition transmissions {1, 2, 4}; and for PUSCH transmission, the current NR protocol supports different quantities of repetition transmissions {1, 2, 4, 8}. Currently, quantities of repetition transmissions of the SRS and the PUSCH are configured by using radio resource control (Radio Resource Control, RRC) signaling. For example, the quantity of repetition transmissions of the PUSCH is configured by using a "ConfiguredGrantConfig:: RepK={n1, n2, n4, n8}" field of the RRC signaling, and the quantity of repetition transmissions of the SRS is configured by using an "SRS-Resource ::RepetitionFactor={n1, n2, n4}" field of the RRC signaling. After receiving the RRC signaling configuration, the UE performs the corresponding quantity of repetition transmissions.

Generally, RRC further includes many processes such as connection management, radio bearer control, and connection mobility. It takes a long time (for example, hundreds of milliseconds) to transmit the RRC signaling from a higher layer to a terminal. Therefore, a change of a transmission channel cannot be flexibly and dynamically adapted. Therefore, in a subsequent NR discussion, for the PUSCH, downlink control information (Downlink Control Information, DCI) is introduced in the 38.214 protocol to dynamically indicate the quantity of repetition transmissions of the PUSCH, to flexibly match channel quality of current PUSCH transmission. Specifically, the quantity of repetition transmissions is determined by using an index of a time domain resource allocation (Time Domain Resource Allocation, TDRA) table in the DCI. The following uses PUSCH transmission as an example to describe the technical solutions of this application. However, the technical solutions of this application are also applicable to downlink repetition transmission.

When a terminal device is scheduled to send a transport block without a channel state information CSI report, or when a terminal device is scheduled to send a transport block and a CSI report on a PUSCH by using DCI, a time domain resource allocation field value m of the DCI provides a row index m+1 to an allocation table. An index row defines a slot offset K₂ and a start and length indicator SLIV, or directly defines a start symbol S, an allocation length L, and a PUSCH mapping type that is to be applied in PUSCH transmission. Specifically, a quantity of repetition transmissions is determined by using an index of a TDRA table in the DCI. Therefore, a current quantity of repetition transmissions of the PUSCH may be indicated by the DCI.

Therefore, the current quantity of repetition transmissions of the PUSCH may be indicated by using the DCI (dynamic scheduling and PUSCH grant-free scheduling of Type2) or RepK (grant-free scheduling of Type1) of an RRC message.

In R15, transmission of one PUSCH is not allowed to cross a slot boundary. Therefore, to avoid PUSCH transmission crossing a slot boundary, the UE may configure PUSCH repetition transmission in consecutive available slots by using a UL grant or RRC signaling, where the PUSCH repetition transmission is referred to as PUSCH repetition typeA. Time domain resources for PUSCH repetition transmission in all slots are the same (reserved).

FIG. 2 is a schematic diagram of time domain resource allocation for PUSCH repetition sending. As shown in the figure, usually, a quantity of time domain resources scheduled by a base station for each transmission is not greater than or equal to 14, and the base station allocates a same time domain resource each time. Therefore, time domain positions occupied by the time domain resources are the same. In addition, a time domain resource scheduled for one transmission occupies one slot. A phenomenon that a transmission resource is discontinuous is caused when the transmission is avoided being divided by a slot boundary.

PUSCH repetition typeB is newly added in the Rel-16 protocol. For PUSCH repetition typeB, a TDRA field in the DCI or a TDRA parameter in grant-free scheduling of type 1 indicates a first "nominal" repetition resource, and a remaining time domain resource for repetition transmission is calculated based on a time domain resource of a first PUSCH and a UL/DL slot configuration. If "nominal" transmission crosses a slot boundary or a DL/UL switching point, the "nominal" transmission is divided into a plurality of PUSCH repetitions at the slot boundary or the switching point. Therefore, an actual quantity of repetitions may be greater than an indicated value.

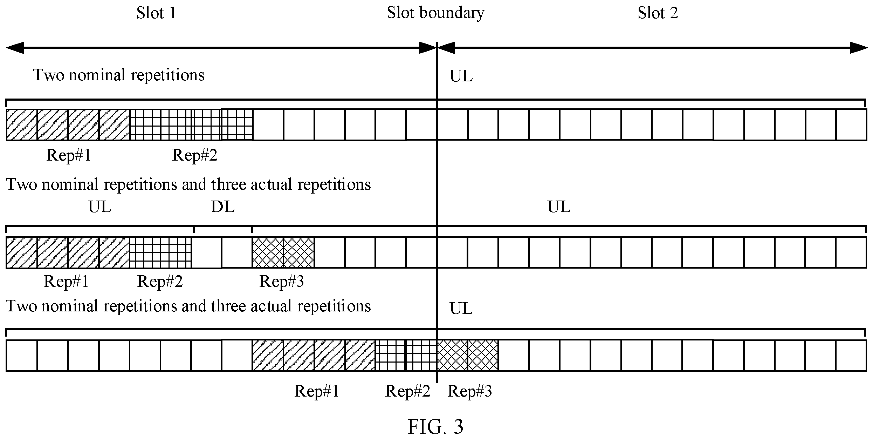

FIG. 3 is a schematic diagram of PUSCH repetition sending across a slot boundary. As shown in the figure, if all time domain resources for one transmission are UL (DL) resources and are less than a slot size, cross-boundary transmission does not occur, and a quantity of actual repetitions (actual repetitions) is equal to a preconfigured quantity of repetitions (nominal repetitions). If a time domain resource for one transmission crosses a UL/DL switching point, the one transmission is divided into a plurality of PUSCH repetitions at the switching point. In this case, the quantity of actual repetitions is greater than the preconfigured quantity of repetitions. If a time domain resource for one transmission crosses a slot boundary (slot boundary), the one transmission is divided into a plurality of PUSCH repetitions at the slot boundary. In this case, the quantity of actual repetitions is greater than the preconfigured quantity of repetitions.

RV cycling is performed during current repetition transmission. To be specific, during a plurality of repetition transmissions, consecutive to-be-sent bit sequences are selected from different start positions of a coded bit sequence in a configured cyclic sequence of RV numbers, rate matching is completed, and repetition sending is performed. Different information bits and check bits are transmitted as much as possible, to increase a combination decoding gain of a receive end.

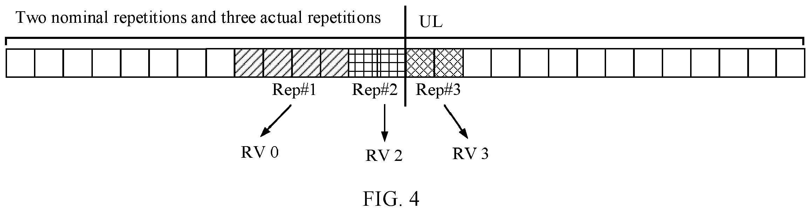

FIG. 4 is a schematic diagram of an RV cycle of PUSCH repetition sending across a slot boundary. As shown in the figure, in an RV cycle, first repetition transmission is Rep#1, and a start position of the repetition transmission is an RV 0; second repetition transmission is Rep#2, and a start position of the repetition transmission is an RV 2; and third repetition transmission is Rep#3, and a start position of the repetition transmission is an RV 3. Different start positions are selected as much as possible, to transmit different information bits and check bits, thereby increasing a combination decoding gain of a receive end.

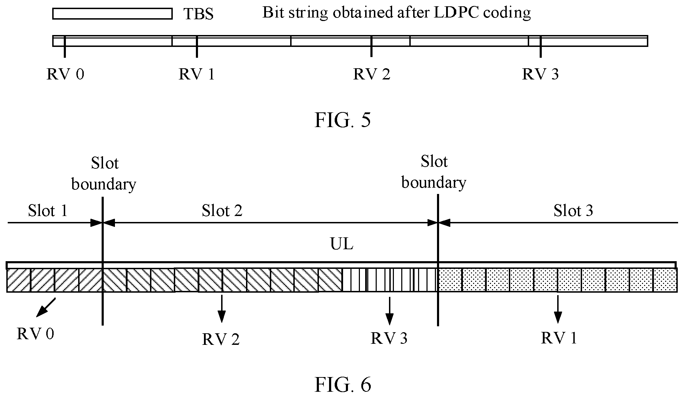

FIG. 5 is a schematic diagram of RV number and start point selection after LDPC coding. As shown in the figure, a transport block size (Transport block size, TBS) is a size of a complete transport resource block. After LDPC coding, RVs are numbered as an RV 0, an RV 1, an RV 2, and an RV 3.

Repetition transmission may be switched when crossing a slot boundary. As a result, a quantity of actually available time domain units for current repetition transmission decreases. However, when the transport block size TBS remains unchanged, an actual transmission bit rate is excessively high, and decoding accuracy of the current repetition transmission is reduced.

FIG. 6 is a schematic diagram of PUSCH repetition transmission across a slot boundary. As shown in the figure, a gNB currently configures more than two PUSCH repetition transmissions of typeB. A time domain resource scheduled for each transmission includes 14 time domain units, and first transmission needs to cross a slot boundary. Therefore, the first transmission is divided into two repetition transmissions. In other words, the first transmission actually occupies only four time domain unit resources, and rate matching and repetition sending are performed starting from a bit at a position of an RV 0 in a bit sequence obtained after LDPC coding. Remaining 10 time domain unit resources are used for second repetition transmission, and rate matching and repetition sending are performed starting from a bit at a position of an RV 2 in the bit sequence obtained after LDPC coding. There are two problems.
(1) First transmission: Although 14 time domain unit resources are preconfigured and a TBS is calculated based on the 14 time domain unit resources, because the current transmission is divided into two transmissions due to a case of crossing the slot boundary, only four time domain units are occupied during the first actual transmission. As a result, an actual transmission bit rate is very high, and the actual bit rate is 14/4 times a bit rate initially configured by the gNB. There is a high probability that decoding fails due to the excessively high actual bit rate. The actual transmission bit rate is an actual transmission bit rate when the current transmission is divided into two transmissions due to the case of crossing the slot boundary, and the bit rate initially configured by the gNB is a bit rate of a configured modulation order.
(2) Second transmission: 10 time domain unit resources are occupied, and bit selection is performed from the position corresponding to the RV 2 in the bit sequence obtained after LDPC coding. In one transmission that originally does not cross a slot boundary, a position of a bit sequence in the current second transmission and a position of a bit sequence in the first transmission should be contiguous in the bit sequence obtained after LDPC coding. In other words, a start point of the bit sequence in the second transmission is at a position, following an end of the bit sequence in the first transmission, in the bit sequence obtained after LDPC coding. However, after one repetition transmission crosses a slot boundary and is divided, in the second transmission, bit selection is performed from the position corresponding to the RV 2 in the bit sequence obtained after LDPC coding. As a result, in the bit sequence obtained after LDPC coding, a part of information bits and/or check bits in the middle of the bit sequence in the first transmission and in the middle of the bit sequence in the second transmission may fail to be transmitted, and consequently, decoding performance of a receive end significantly deteriorates.

In wireless communication, in some deep coverage scenarios, such as cell edges or basements, a propagation path loss of a radio signal is severe. In this case, because a transmit power of UE is usually low, for example, 23 dBm, and is far lower than a transmit power of the gNB (for example, a typical transmit power of a gNB with a bandwidth of 20 MHz is 46 dBm), a coverage enhancement means needs to be considered. This is particularly important for uplink transmission. A method for enhancing coverage performance is repeatedly sending data. For example, the UE repeatedly sends PUSCH data, and the gNB performs combination detection on the repeatedly sent data. This can improve channel estimation performance and data demodulation performance, thereby improving a cell coverage capability.

As described above, a current NR protocol supports uplink repetition transmission. That is, the UE repeatedly sends data, and the gNB receives and combines the repeatedly sent data. This increases a signal-to-noise ratio of a received signal, and effectively improves a channel estimation capability and demodulation performance, thereby improving the cell coverage capability.

In view of the foregoing problem, in this application, start point selection of an RV during repetition transmission is agreed upon between the gNB and the UE, to resolve a problem in the conventional technology that decoding fails duo to an excessively high actual bit rate caused by a case in which the repetition transmission crosses a slot boundary.

It should be understood that a time domain unit in embodiments of this application may be a time domain symbol, a subframe, a half-frame, a frame, or the like. This is not limited herein in this application.

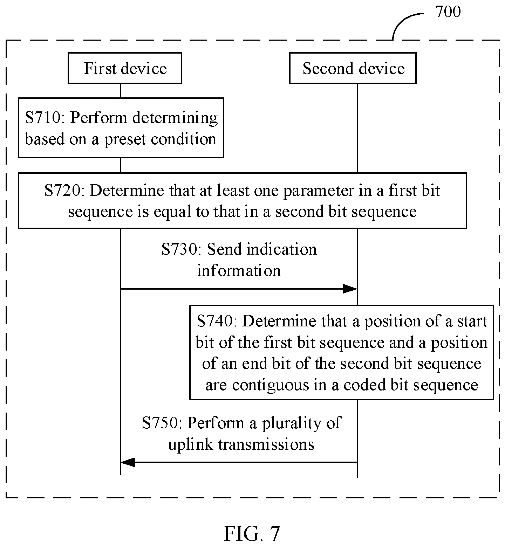

FIG. 7 is a schematic flowchart of an example of a repetition transmission method applicable to this application. The method includes the following steps.

In the following embodiments, for differentiation and without loss of generality, a first device is used to represent a network device, and a second device is used to represent a terminal device.

It should be understood that the first device and the second device may alternatively be in other forms. For example, both the first device and the second device may be network devices, both the first device and the second device may be terminal devices, or the first device may be a terminal device and the second device may be a network device. This is not limited herein.

S710: The first device performs determining based on a preset condition.

Optionally, in a process in which the first device initially configures a time domain resource, basic parameters such as a start point and a length of a bit sequence transmitted in a time domain unit that is configured for repetition transmission are configured by the first device. The configured repetition transmission includes first transmission and second transmission. The first transmission and the second transmission carry a same transport block. The second transmission is previous transmission of the first transmission. In other words, the second transmission is adjacent to the first transmission in terms of time and is prior to the first transmission. The first transmission and the second transmission may occupy different slots or be discontinuous in one slot. For example, when transmission crosses a switching point between uplink data and downlink data in one slot, the first transmission and the second transmission are discontinuous in one slot. Alternatively, when the first transmission and the second transmission are in different slots, the first transmission and the second transmission are separated by a slot boundary. Therefore, the first device may calculate, in a preset process, whether the time domain unit occupies at least two slots or is discontinuous in one slot.

Specifically, after learning the foregoing calculation result, the first device performs determining based on a condition, to be specific, determines whether a time domain unit for the first transmission meets a first preset condition or whether a time domain unit for the second transmission meets a second preset condition.

Optionally, the first preset condition may include whether an actual transmission bit rate of a first bit sequence in the first transmission is greater than or equal to a first preset threshold, where the actual transmission bit rate of the first bit sequence in the first transmission is a product of a configured initial bit rate of a bit sequence transmitted in a time domain unit used for repetition transmission and a first ratio, the initial bit rate is a bit rate configured for one repetition transmission, and the first ratio is a ratio of a configured quantity of time domain units for the one repetition transmission to a quantity of time domain units for the first transmission.

For example, the preconfigured quantity of time domain units for the one repetition transmission is 14, the initial bit rate of the first bit sequence in the first transmission is 0.6, and the quantity of time domain units for the first transmission is 10. It is assumed that the first preset threshold is 0.7. When the time domain unit for the first transmission and the time domain unit for the second transmission do not include a time domain unit in which a DMRS is located, the actual transmission bit rate of the first bit sequence in the first transmission, that is, 0.6* 14/10 = 0.84, is greater than 0.7. In this case, the actual transmission bit rate of the first bit sequence in the first transmission is greater than the first preset threshold. When the time domain unit for the first transmission and the time domain unit for the second transmission each include one DMRS, the quantity of time domain units for the one repetition transmission is 14, and the actual transmission bit rate of the first bit sequence in the first transmission, that is 0.6* 12/9 = 0.8, is greater than 0.7. In this case, the actual transmission bit rate of the first bit sequence in the first transmission is greater than the first preset threshold.

Optionally, the first preset condition may include whether a ratio of the quantity of time domain units for the first transmission to the configured quantity of time domain units for the one repetition transmission is less than or equal to a second preset threshold.

For example, the quantity of time domain units for the first transmission is 12, and the configured quantity of time domain units for the one repetition transmission is 14. It is assumed that the second preset threshold is 0.9. When the time domain unit for the first transmission and the time domain unit for the second transmission do not include a time domain unit in which a DMRS is located, the ratio of the quantity of time domain units for the first transmission to the configured quantity of time domain units for the one repetition transmission is 12/14 = 0.857143 < 0.9. In this case, the ratio of the quantity of time domain units for the first transmission to the configured quantity of time domain units for the one repetition transmission is greater than the second preset threshold. When a DMRS occupies one time domain unit for the first transmission and one time domain unit for the second transmission, the ratio of the quantity of time domain units for the first transmission to the configured quantity of time domain units for the one repetition transmission is 11/13 = 0.846154 < 0.9. In this case, the ratio of the quantity of time domain units for the first transmission to the configured quantity of time domain units for the one repetition transmission is greater than the second preset threshold.

Optionally, an actual transmission bit rate of a second bit sequence in the second transmission is greater than or equal to a third preset threshold, where the actual transmission bit rate of the second bit sequence in the second transmission is a product of a configured initial bit rate of a bit sequence transmitted in a time domain unit for one repetition transmission and a second ratio, the initial bit rate is a configured bit rate of the bit sequence sent in the time domain unit for the one repetition transmission, and the second ratio is a ratio of a configured quantity of time domain units for the one repetition transmission to the quantity of time domain units for the second transmission.

For example, the configured quantity of time domain units for the one repetition transmission is 14, the initial bit rate of the second bit sequence in the second transmission is 0.6, and the quantity of time domain units for the second transmission is 4. It is assumed that the third preset threshold is 1. When the time domain unit for the first transmission and the time domain unit for the second transmission do not include a time domain unit in which a DMRS is located, the actual transmission bit rate of the second bit sequence in the second transmission is 0.6^{∗}14/4 = 2.1 > 1. In this case, the actual transmission bit rate of the second bit sequence in the second transmission is greater than the third preset threshold. When a DMRS occupies one time domain unit for the first transmission and one time domain unit for the second transmission, the actual transmission bit rate of the second bit sequence in the second transmission is 0.6* 13/3 = 2.6 > 1. In this case, the actual transmission bit rate of the second bit sequence in the second transmission is greater than the third preset threshold.

Optionally, it is determined whether a ratio of the quantity of time domain units for the second transmission to the preconfigured quantity of time domain units for the one repetition transmission is less than or equal to a fourth preset threshold.

For example, the quantity of time domain units for the second transmission is 2, and the configured quantity of time domain units used for one repetition transmission is 14. It is assumed that the fourth preset threshold is 1/2. When the time domain unit for the first transmission and the time domain unit for the second transmission do not include a time domain unit in which a DMRS is located, the ratio of the quantity of time domain units for the second transmission to the configured quantity of time domain units for the one repetition transmission is 2/14 = 0.14286 < 1/2. In this case, the ratio of the quantity of time domain units for the second transmission to the configured quantity of time domain units for the one repetition transmission is less than the fourth preset threshold. When a DMRS occupies one time domain unit for the first transmission and one time domain unit for the second transmission, the ratio of the quantity of time domain units for the second transmission to the configured quantity of time domain units for the one repetition transmission is 1/12 = 0.083333 < 1/2. In this case, the ratio of the quantity of time domain units for the second transmission to the configured quantity of time domain units for the one repetition transmission is less than the fourth preset threshold.

Optionally, it is determined whether a ratio of the quantity of time domain units for the second transmission to the quantity of time domain units for the first transmission is less than or equal to a fifth preset threshold.

For example, the quantity of time domain units for the second transmission is 4, and the quantity of time domain units for the first transmission is 10. It is assumed that the fifth preset threshold is 1/2. When the time domain unit for the first transmission and the time domain unit for the second transmission do not include a time domain unit in which a DMRS is located, the ratio of the quantity of time domain units for the second transmission to the quantity of time domain units for the first transmission is 4/10 = 0.4 < 1/2. In this case, the ratio of the quantity of time domain units for the second transmission to the quantity of time domain units for the first transmission is less than the fifth preset threshold. When a DMRS occupies one time domain unit for the first transmission and one time domain unit for the second transmission, the ratio of the quantity of time domain units for the second transmission to the quantity of time domain units for the first transmission is 3/8 = 0.375 < 1/2. In this case, the ratio of the quantity of time domain units for the second transmission to the quantity of time domain units for the first transmission is less than the fifth preset threshold.

The first preset threshold, the second preset threshold, the third preset threshold, the fourth preset threshold, and the fifth preset threshold may be pre-specified, for example, defined in a protocol, may be configured by the network device, or may be empirical values determined based on a historical communication status. This is not limited herein in this application.

S720: Determine that at least one parameter in the first bit sequence is equal to that in the second bit sequence.

Optionally, both the first device and the second device determine that at least one parameter in the first bit sequence is equal to that in the second bit sequence, where the parameter includes a power, precoding, and an antenna port.

When the time domain unit for the first transmission and the time domain unit for the second transmission occupy different slots or are discontinuous in one slot, data transmission is performed in a form of two independent repetition transmissions. Related parameter configurations of the first transmission and the second transmission are independent of each other. A receive end performs independent channel estimation on data in the two transmissions, and then separately demodulates and decodes the data in the two transmissions. However, because the data is transmitted in two independent transmissions, when the receive end performs channel estimation on data in each transmission, a small quantity of DMRS sequences are used. This results in inaccurate channel estimation. Therefore, it is determined that at least one parameter in the first bit sequence is equal to that in the second bit sequence, so that joint channel estimation can be performed after the two bit sequences are received, to improve accuracy of channel estimation. This improves accuracy of data demodulation and decoding of two transmissions. In an actual implementation process, because two data transmissions are independent and parameters are inconsistent, joint channel estimation may still fail. For example, when a power of the second transmission greatly changes, a random phase relative to the first transmission may be generated in the second transmission process, and the random phase is coupled on an estimated channel. Because the random phase cannot be eliminated, the channel estimation is inaccurate. When transmit antenna ports are not the same port, channels estimated by using the DMRS are also inconsistent. In addition, in data transmission, precoding of the two transmissions should also be the same, and this helps the receive end perform joint channel estimation.

It is determined that at least one parameter in the first bit sequence is equal to that in the second bit sequence. Channel estimation can be performed based on all DMRS time domain units in two repetition transmissions. In comparison with channel estimation performed in each repetition transmission by using a DMRS time domain unit in the current repetition transmission, more DMRS time domain units can be used to improve accuracy of channel estimation, thereby improving reliability of data demodulation and decoding of transmission.

S730: Send indication information.

Optionally, when the time domain unit for the first transmission or the time domain unit for the second transmission respectively meets the first preset condition or the second preset condition in S710, the first device may notify, by using the sent indication information, the second device of how to select a position of a start bit of the first bit sequence. For example, the indication information may be carried in downlink control information DCI, and a value of an MCS index in the DCI during repetition transmission may be {29 to 31}.

For example, when the time domain unit for the first transmission or the time domain unit for the second transmission respectively meets the first preset condition or the second preset condition in S710, the first device notifies, by using the sent indication information, the second device of how to select the position of the start bit of the first bit sequence. For example, the first device notifies, by using a sent RRC message, the second device of how to select a position of a start point of the first bit sequence.

In a specific implementation process, the indication information may not include information indicating, to the second device, that a position of the start bit of the first bit sequence and a position of an end bit of the second bit sequence are contiguous in a coded bit sequence. For example, when the foregoing condition is met, the first device determines, based on a calculation result in S710, how to select the position of the start bit of the first bit sequence. In addition, herein, a process and a result of determining the position of the start bit of the first bit sequence in the coded bit sequence are consistent with those of the first device.

S740: Determine that the position of the start bit of the first bit sequence and the position of the end bit of the second bit sequence are contiguous in the coded bit sequence.

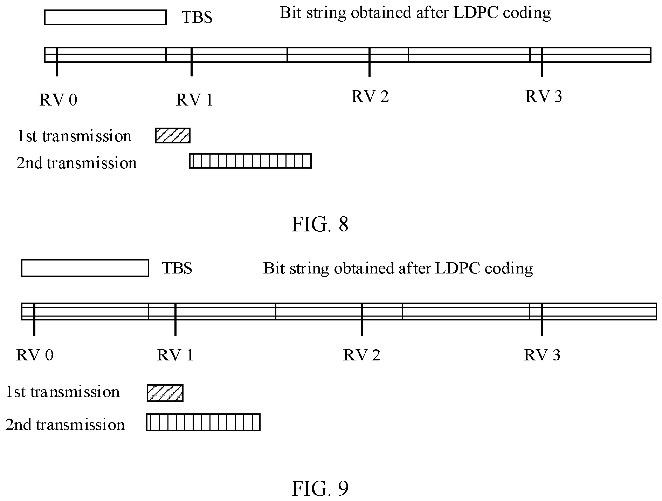

For example, after receiving the indication information, the second device determines that the position of the start bit of the first bit sequence and the position of the end bit of the second bit sequence are contiguous in the coded bit sequence. That the positions are contiguous indicates that the first bit sequence is seamlessly connected to the second bit sequence, and a to-be-sent bit sequence can be seamlessly and continuously selected backward from the coded bit sequence. FIG. 8 is a schematic diagram of an example of determining a start point of a bit sequence in repetition transmission applicable to this application. As shown in the figure, when a continuous time domain resource used for repetition transmission crosses a slot boundary, a position of a start bit of a first bit sequence and a position of an end bit of a second bit sequence are contiguous in a coded bit sequence, and a to-be-sent bit sequence can be seamlessly and continuously selected backward from a bit sequence obtained after LDPC coding.

For example, after receiving the indication information, the second device determines that the position of the start bit of the first bit sequence and a position of a start bit of the second bit sequence are the same in the coded bit sequence, and determines that an RV number of the first bit sequence is the same as an RV number of the second bit sequence. FIG. 9 is a schematic diagram of another example of determining a start point of a bit sequence in repetition transmission applicable to this application. As shown in the figure, when a continuous time domain resource used for repetition transmission crosses a slot boundary, a position of a start bit of a first bit sequence and a position of a start bit of a second bit sequence are the same in a coded bit sequence.

For example, after receiving the indication information, the second device determines that a start position of the first bit sequence may alternatively be any position between a start position and an end position of the second bit sequence.

For example, the second device determines, according to a preset rule, that the position of the start bit of the first bit sequence and a position of an end bit of the second bit sequence are contiguous in the coded bit sequence.

For example, the second device determines, according to the preset rule, that the position of the start bit of the first bit sequence and the position of the start bit of the second bit sequence are the same in the coded bit sequence, and determines that an RV number of the first bit sequence is the same as an RV number of the second bit sequence.

For example, the second device determines, according to the preset rule, that a start position of the first bit sequence may alternatively be any position between the start position and the end position of the second bit sequence.

In a specific implementation process, the indication information received by the second device may not include information indicating, to the second device, that the position of the start bit of the first bit sequence and the position of the end bit of the second bit sequence are contiguous in the coded bit sequence. For example, the second device initially performs calculation such as that in S710, and determines, based on a calculation result, whether the time domain unit for the first transmission or the time domain unit for the second transmission correspondingly meets the first preset condition or the second preset condition in S710. When the first preset condition or the second preset condition in S710 is met, the second device determines, based on the calculation result in S710, that the position of the start bit of the first bit sequence and the position of the end bit of the second bit sequence are contiguous in the coded bit sequence. In addition, herein, a process and a result of determining the position of the start bit of the first bit sequence in the coded bit sequence are consistent with those of the first device.

In a specific implementation process, an execution sequence of step S720, step S730, and step S740 is not unique. For example, in the technical solution of the method 700, step S720 may be performed before step S730 and step S740, step S730 and step S740 may be performed before step S720, or step S730 may be performed before step S720 and step S740. Herein, this is not limited in this application.

S750: Perform a plurality of uplink transmissions.

When repetition transmission crosses a slot boundary or an uplink data/downlink data switching point, a time domain resource may be discontinuous. As a result, a quantity of actually available time domain units for current repetition transmission decreases. However, when a time domain resource used for repetition transmission remains unchanged, an actual bit rate is excessively high, and decoding accuracy of the current repetition transmission is reduced. According to implementation of the method 700, optionally, the first device sends the indication information; and the second device re-determines the position of the start bit of the first bit sequence in the coded bit sequence based on the indication information or according to the preset rule, and determines that at least one parameter in the first bit sequence is equal to that in the second bit sequence. In this way, more DMRS time domain units can be used to improve accuracy of channel estimation and reduce an actual transmission bit rate. Even if a case of crossing a slot boundary or an uplink data/downlink data switching point exists, a plurality of repetition transmissions can still ensure high accuracy of combination decoding.

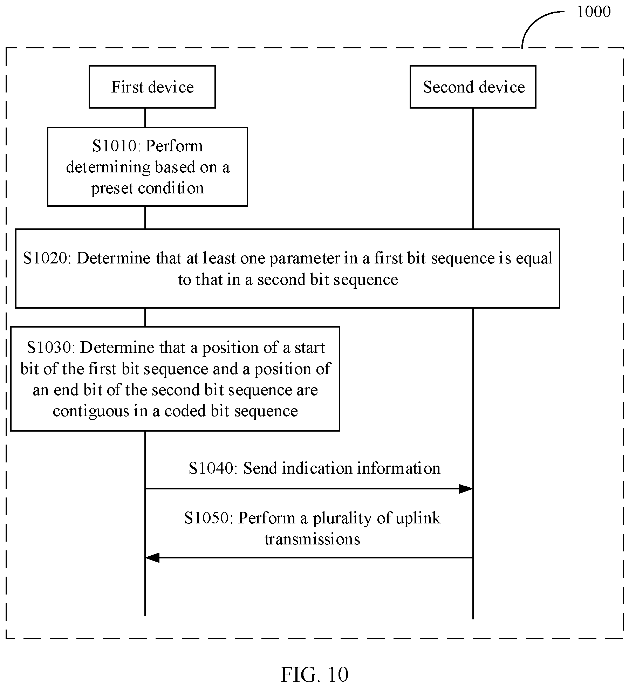

FIG. 10 is a schematic flowchart of another example of a repetition transmission method applicable to this application. The method includes the following steps.

In the following embodiments, for differentiation and without loss of generality, a first device is used to represent a network device, and a second device is used to represent a terminal device.

It should be understood that the first device and the second device may alternatively be in other forms. For example, both the first device and the second device may be network devices, both the first device and the second device may be terminal devices, or the first device may be a terminal device and the second device may be a network device. This is not limited herein.

S1010: Perform determining based on a preset condition.

For determining based on the preset condition, refer to the description of S710 in the method 700. For brevity, details are not described herein again.

S1020: Determine that at least one parameter in a first bit sequence is equal to that in a second bit sequence.

For a description of determining that at least one parameter in the first bit sequence is equal to that in the second bit sequence, refer to the description of S720 in the method 700. For brevity, details are not described herein again.

S1030: Determine a start position of the first bit sequence.

For example, the first device determines, based on a calculation result, that a position of a start bit of the first bit sequence and a position of an end bit of the second bit sequence are contiguous in a coded bit sequence. That the positions are contiguous indicates that the first bit sequence is seamlessly connected to the second bit sequence, and a to-be-sent bit sequence can be seamlessly and continuously selected backward from the coded bit sequence.

For example, the first device determines, based on the calculation result, that the position of the start bit of the first bit sequence and a position of a start bit of the second bit sequence are the same in the coded bit sequence, and determines that an RV number of the first bit sequence is the same as an RV number of the second bit sequence.

For example, the first device determines, based on the calculation result, that the start position of the first bit sequence may alternatively be any position between a start position and an end position of the second bit sequence.

For example, the first device determines, according to a preset rule, that the position of the start bit of the first bit sequence and the position of the end bit of the second bit sequence are contiguous in the coded bit sequence.

For example, the first device determines, according to the preset rule, that the position of the start bit of the first bit sequence and the position of the start bit of the second bit sequence are the same in the coded bit sequence, and determines that an RV number of the first bit sequence is the same as an RV number of the second bit sequence.

For example, the first device determines, according to the preset rule, that the start position of the first bit sequence may alternatively be any position between the start position and the end position of the second bit sequence.

S1040: Send indication information.

For example, when a time domain unit for first transmission or a time domain unit for second transmission respectively meets the first preset condition or the second preset condition in S710, the first device notifies, by using the sent indication information, the second device of how to select the position of the start bit of the first bit sequence. For example, the indication information may be carried in downlink control information DCI, and a value of an MCS index in the DCI during repetition transmission may be {29 to 31}.

For example, when the time domain unit for the first transmission or the time domain unit for the second transmission respectively meets the first preset condition or the second preset condition in S710, the first device notifies, by using the sent indication information, the second device of how to select the position of the start bit of the first bit sequence. For example, the first device notifies, by using a sent RRC message, the second device of how to select a position of a start point of the first bit sequence.

In a specific implementation process, the indication information may not include information indicating, to the second device, that the position of the start bit of the first bit sequence and the position of the end bit of the second bit sequence are contiguous in the coded bit sequence. For example, when the time domain unit for the first transmission or the time domain unit for the second transmission respectively meets the first preset condition or the second preset condition in S710, the first device determines, based on a calculation result in S710, how to select the position of the start bit of the first bit sequence. In addition, herein, a process and a result of determining the position of the start bit of the first bit sequence in the coded bit sequence are consistent with those of the first device.

S1050: Perform a plurality of downlink transmissions.

When repetition transmission crosses a slot boundary or an uplink data/downlink data switching point, a time domain resource may be discontinuous. As a result, a quantity of actually available time domain units for current repetition transmission decreases. However, when a time domain resource used for repetition transmission remains unchanged, an actual bit rate is excessively high, and decoding accuracy of the current repetition transmission is reduced. According to implementation of the method 1000, optionally, the first device re-determines the position of the start bit of the first bit sequence in the coded bit sequence based on the calculation result or according to the preset rule, and determines that at least one transmit parameter in the first bit sequence is equal to that in the second bit sequence. In this way, more DMRS time domain units can be used to improve accuracy of channel estimation and reduce an actual transmission bit rate. Even if a case of crossing a slot boundary or an uplink data/downlink data switching point exists, a plurality of repetition transmissions can still ensure high accuracy of combination decoding.

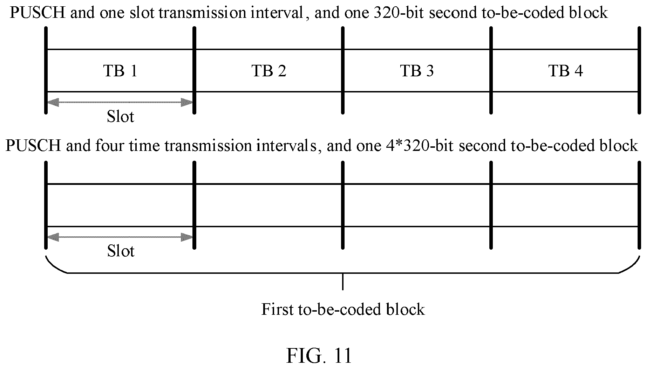

FIG. 11 is a schematic diagram of repetition transmission in a plurality of time domain units after a plurality of to-be-transmitted blocks are combined into one larger transport block and then channel coding is performed on the larger transport block, where the repetition transmission is applicable to this application. As shown in FIG. 11, when the time domain units are slots, four second to-be-coded blocks in four slots are combined into one first to-be-coded block. Each of the four second to-be-coded blocks has 320 bits. In this case, the first to-be-coded block has 1280 bits. LDPC channel coding and rate matching are performed on the first to-be-coded block, that is, unified LDPC channel coding and rate matching are performed on the four second to-be-coded blocks, so that a good channel coding gain is obtained. Then, in the four slots, a bit is selected, for sending, from a bit sequence obtained after LDPC coding and rate matching are performed. For example, if 1/3 LDPC coding is used, the first to-be-coded block that has 1280 bits is encoded into a 3840-bit to-be-coded block. It is assumed that a bit rate of each transmission is 1/3. In this case, in each slot, a 1280-bit to-be-coded block is selected, based on the bit rate 1/3 and in an order of an RV 0, an RV 2, an RV 3, and an RV 1 of repetition transmissions, from a bit sequence obtained after LDPC coding and rate matching are performed on the 3840-bit first to-be-coded block, and is separately transmitted in one slot.

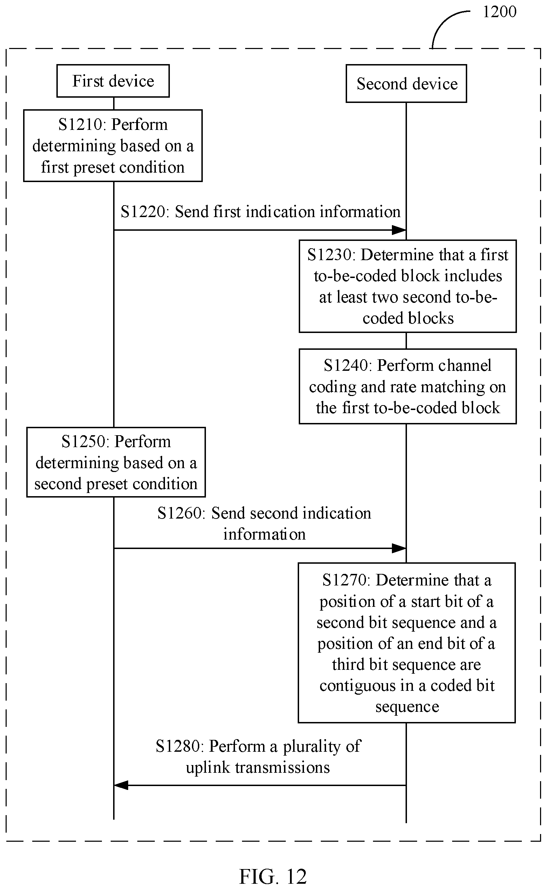

FIG. 12 is a schematic flowchart of another example of a data repetition transmission method applicable to this application. The method includes the following steps.

In the following embodiments, for differentiation and without loss of generality, a first device is used to represent a network device, and a second device is used to represent a terminal device.

It should be understood that the first device and the second device may alternatively be in other forms. For example, both the first device and the second device may be network devices, both the first device and the second device may be terminal devices, or the first device may be a terminal device and the second device may be a network device. This is not limited herein.

S1210: Perform determining based on a first preset condition.

Optionally, in a process in which the first device initially configures a time domain resource, a to-be-coded block used for repetition transmission is configured by the first device. The first device may determine, in a preset process, whether a minimum quantity of bits of a to-be-coded block in second to-be-coded blocks meets the first preset condition. Each to-be-coded block in the second to-be-coded blocks is a to-be-coded block transmitted in one time domain unit for one repetition transmission.

For example, when learning the minimum quantity of bits of the to-be-coded block in the second to-be-coded blocks, the first device performs determining based on a condition, to be specific, determines whether the minimum quantity of bits of the to-be-coded block in the second to-be-coded blocks is less than or equal to a first preset threshold.

For example, the minimum quantity of bits of the to-be-coded block in the second to-be-coded blocks is 2. It is assumed that the first preset threshold is 4. That is, 2 < 4. In this case, the minimum quantity of bits of the to-be-coded block in the second to-be-coded blocks is less than the first preset threshold.

For example, when learning the minimum quantity of bits of the to-be-coded block in the second to-be-coded blocks, the first device performs determining based on a condition, to be specific, determines whether a sum of quantities of bits of at least two second to-be-coded blocks in the second to-be-coded blocks is less than or equal to a second preset threshold.

For example, the sum of the quantities of bits of the at least two to-be-coded blocks in the second to-be-coded blocks is 3. It is assumed that the second preset threshold is 5. That is, 3 < 5. In this case, the sum of the quantities of bits of the at least two second to-be-coded blocks in the second to-be-coded blocks is less than the second preset threshold.

S1220: Send first indication information.

Optionally, when the first device learns, through calculation, that the minimum quantity of bits of the to-be-coded block in the second to-be-coded blocks is less than a third preset threshold, the first device notifies, by using the sent first indication information, the second device to determine that a first to-be-coded block includes the at least two second to-be-coded blocks. For example, the first indication information may be carried in DCI, and a value of an MCS index in the DCI during repetition transmission may be {29 to 31}, or a 1-bit field RetransRVstart is newly added in the DCI and a value of the field is 1.

Optionally, when the first device learns, through calculation, that the minimum quantity of bits of the to-be-coded block in the second to-be-coded blocks is less than the third preset threshold, the first device notifies, by using the sent indication information, the second device to determine that the first to-be-coded block includes the at least two second to-be-coded blocks. For example, the first device notifies, by using a sent RRC message, the second device to determine that the first to-be-coded block includes the at least two second to-be-coded blocks.

S1230: Determine that the first to-be-coded block includes the at least two second to-be-coded blocks.

For example, after receiving the first indication information, the second device determines that the first to-be-coded block includes the at least two second to-be-coded blocks.

For example, four second to-be-coded blocks in four slots for one repetition transmission are determined as one first to-be-coded block. A quantity of bits of each of the four to-be-coded blocks is 360, and a quantity of bits of the first to-be-coded block is four times a quantity of bits of any one of the four to-be-coded blocks. That is, the quantity of bits of the first to-be-coded block is 360*4 = 1440.

For example, four second to-be-coded blocks in four slots for one repetition transmission are determined as one first to-be-coded block. Quantities of bits of the four to-be-coded blocks are 360, 420, 180, and 240, and a quantity of bits of the first to-be-coded block is a sum of the quantities of bits of the four to-be-coded blocks. That is, the quantity of bits of the first to-be-coded block is 360 + 420 + 180 + 240 = 1200.

For example, four second to-be-coded blocks in four slots for one repetition transmission are determined as one first to-be-coded block. Quantities of bits of the four to-be-coded blocks are 360, 420, 180, and 240, and a quantity of bits of the first to-be-coded block is four times a minimum quantity of bits of the to-be-coded block. That is, the quantity of bits of the first to-be-coded block is 180*4 = 720.

For example, four second to-be-coded blocks in four slots for one repetition transmission are determined as one first to-be-coded block. Quantities of bits of the four to-be-coded blocks are 360, 420, 180, and 240, and a quantity of bits of the first to-be-coded block is four times a maximum quantity of bits of the to-be-coded block. That is, the quantity of bits of the first to-be-coded block is 420*4 = 1680.

S 1240: Perform channel coding and rate matching on the first to-be-coded block.

For example, the second device performs LDPC coding and rate matching on the first to-be-coded block to obtain a sequence to be sent in a plurality of time domain units.

For example, when independent channel coding and rate matching are performed on a second to-be-coded block, if quantities of bits of four second to-be-coded blocks are all 100 bits, and an initial bit rate is 1/2, four second to-be-coded blocks whose quantities of bits are 300 are obtained through 1/3 LDPC channel coding, rate matching is separately performed based on a bit rate of 1/2, and finally a 200-bit coded bit sequence is selected for transmission in four slots. When channel coding and rate matching are performed on the first to-be-coded block, a quantity of bits of the first to-be-coded block is four times a quantity of bits of any second to-be-coded block, that is, 4^{∗}100 = 400. A 1200-bit coded bit sequence is obtained through 1/3 LDPC coding, and a quantity of bits that is the same as a quantity of bits of the bit sequence selected after independent channel coding and rate matching are performed on the second to-be-coded block is selected for repetition transmission. That is, a 200-bit coded bit sequence is selected from the 1200-bit coded bit sequence for transmission in four slots. In this case, a bit rate is 1/6.

S 1250: Perform determining based on a second preset condition.

Optionally, in a process in which the first device initially configures a time domain resource, basic parameters such as a start point and a length of a bit sequence transmitted in a time domain unit that is configured for one repetition transmission are configured by the first device. The configured one repetition transmission includes first transmission and second transmission. The first transmission and the second transmission carry a same transport block. The second transmission is previous transmission of the first transmission. For example, in one slot, when transmission crosses a switching point between uplink data and downlink data, the first transmission and the second transmission are discontinuous in the slot. Therefore, the first device may calculate, in a preset process, whether one transmission occupies at least two slots or is discontinuous in one slot.

Optionally, the first device determines, according to a preset rule, that a position of a start bit of a first bit sequence and a position of an end bit of a second bit sequence are contiguous in a coded bit sequence. The first bit sequence is a bit sequence in the first transmission, the second bit sequence is a bit sequence in the second transmission, the first transmission and the second transmission carry a same transport block, and the second transmission is previous transmission of the first transmission. That the positions are contiguous indicates that the first bit sequence is seamlessly connected to the second bit sequence, and a to-be-sent bit sequence can be seamlessly and continuously selected backward from the coded bit sequence.

Optionally, after learning the foregoing calculation result, the first device performs determining based on a condition, to be specific, determines whether a time domain unit for the first transmission meets a second preset condition or whether a time domain unit for the second transmission meets a third preset condition.

For example, the second preset condition may include whether an actual transmission bit rate of the first bit sequence in the first transmission is greater than or equal to a fourth preset threshold, where the actual transmission bit rate of the first bit sequence in the first transmission is a product of a configured initial bit rate of a bit sequence transmitted in a time domain unit used for repetition transmission and a first ratio, the initial bit rate is a bit rate configured for one repetition transmission, and the first ratio is a ratio of a configured quantity of time domain units for the one repetition transmission to a quantity of time domain units for the first transmission.

For example, the configured quantity of time domain units for the one repetition transmission is 4, the initial bit rate of the first bit sequence in the first transmission is 0.6, and the quantity of time domain units for the first transmission is 10. It is assumed that the fourth preset threshold is 1. When neither the time domain unit for the first transmission nor the time domain unit for the second transmission carries a DMRS, the actual transmission bit rate of the first bit sequence in the first transmission is 0.6* 14/10 = 0.84 < 1. In this case, the actual transmission bit rate of the first bit sequence in the first transmission is less than the fourth preset threshold. When the time domain unit for the first transmission and the time domain unit for the second transmission each carry one DMRS, the actual transmission bit rate of the first bit sequence in the first transmission is 0.6*12/9 = 0.8 < 1. In this case, the actual transmission bit rate of the first bit sequence in the first transmission is less than the fourth preset threshold.

For example, it is determined whether a ratio of the quantity of time domain units for the first transmission to the configured quantity of time domain units for the one repetition transmission is less than or equal to a fifth preset threshold.

For example, the quantity of time domain units for the first transmission is 12, and the configured quantity of time domain units for the one repetition transmission is 14. It is assumed that the fifth preset threshold is 1/2. When the time domain unit for the first transmission and the time domain unit for the second transmission do not include a time domain unit in which a DMRS is located, the ratio of the quantity of time domain units for the first transmission to the configured quantity of time domain units used for repetition transmission is 12/14 = 0.857143 > 1/2. In this case, the ratio of the quantity of time domain units for the first transmission to the configured quantity of time domain units for the one repetition transmission is greater than the fifth preset threshold. When a DMRS occupies one time domain unit for the first transmission and one time domain unit for the second transmission, the ratio of the quantity of time domain units for the first transmission to the configured quantity of time domain units for the one repetition transmission is 11/12 = 0.91667 > 1/2. In this case, the ratio of the quantity of time domain units for the first transmission to the configured quantity of time domain units for the one repetition transmission is greater than the fifth preset threshold.

Optionally, after learning the foregoing calculation result, the first device performs determining based on a condition, to be specific, determines whether a quantity of time domain units for the second transmission meets a fourth preset condition.

Specifically, whether an actual bit rate of the second bit sequence in the second transmission is greater than or equal to a sixth preset threshold, where the actual bit rate of the second bit sequence in the second transmission is a product of an initial bit rate of the second bit sequence in the second transmission and a ratio, and the ratio is a ratio of the quantity of time domain units for the one repetition transmission to the quantity of time domain units for the second transmission.

For example, the quantity of time domain units for the one repetition transmission is 14, the initial bit rate of the second bit sequence in the second transmission is 0.6, and the quantity of time domain units for the second transmission is 4. It is assumed that the sixth preset threshold is 1. When the time domain unit for the first transmission and the time domain unit for the second transmission do not include a time domain unit in which a DMRS is located, the actual bit rate of the second bit sequence in the second transmission is 0.6^{∗}14/4 = 2.1 > 1. In this case, the actual bit rate of the second bit sequence in the second transmission is greater than the sixth preset threshold. When a DMRS occupies one time domain unit for the first transmission and one time domain unit for the second transmission, the actual bit rate of the second bit sequence in the second transmission is 0.6^{∗}12/3 = 2.4 > 1. In this case, the actual bit rate of the second bit sequence in the second transmission is greater than the sixth preset threshold.

For example, it is determined whether a ratio of the quantity of time domain units for the second transmission to the quantity of time domain units used for repetition transmission is less than or equal to a seventh preset threshold.

For example, the quantity of time domain units for the second transmission is 2, and the quantity of time domain units for the one repetition transmission is 14. It is assumed that the seventh threshold is 1/2. When the time domain unit for the first transmission and the time domain unit for the second transmission do not include a time domain unit in which a DMRS is located, the ratio of the quantity of time domain units for the second transmission to the quantity of time domain units for the one repetition transmission is 2/14 = 0.14286 < 1/2. In this case, the ratio of the quantity of time domain units for the second transmission to the quantity of time domain units for the one repetition transmission is less than the seventh preset threshold. When a DMRS occupies one time domain unit for the first transmission and one time domain unit for the second transmission, the ratio of the quantity of time domain units for the second transmission to the quantity of time domain units for the one repetition transmission is 1/12 = 0.08333 < 1/2. In this case, the ratio of the quantity of time domain units for the second transmission to the quantity of time domain units for the one repetition transmission is less than the seventh preset threshold.

For example, it is determined whether a ratio of the quantity of time domain units for the second transmission to the quantity of time domain units for the first transmission is less than or equal to an eighth preset threshold.

For example, the quantity of time domain units for the second transmission is 4, and the quantity of time domain units for the first transmission is 10. It is assumed that the eighth preset threshold is 1/2. When the time domain unit for the first transmission and the time domain unit for the second transmission do not include a time domain unit in which a DMRS is located, the ratio of the quantity of time domain units for the second transmission to the quantity of time domain units for the first transmission is 4/10 = 0.4 < 1/2. In this case, the ratio of the quantity of time domain units for the second transmission to the quantity of time domain units for the first transmission is less than the eighth preset threshold. When a DMRS occupies one time domain unit for the first transmission and one time domain unit for the second transmission, the ratio of the quantity of time domain units for the second transmission to the quantity of time domain units for the first transmission is 3/9 = 0.3333 < 1/2. In this case, the ratio of the quantity of time domain units for the second transmission to the quantity of time domain units for the first transmission is less than the eighth preset threshold.

Values of the first preset threshold to the eighth preset threshold may be pre-specified, for example, defined in a protocol, may be configured by the network device, or may be empirical values determined based on a historical communication status. This is not limited herein in this application.

S1260: Send second indication information.

Optionally, when the time-domain unit for the first transmission or the time-domain unit for the second transmission respectively meets the first preset condition or the second preset condition in S710, the first device notifies, by using the sent second indication information, the second device that the position of the start bit of the first bit sequence and the position of the end bit of the second bit sequence are contiguous in the coded bit sequence. For example, the second indication information may be carried in downlink control information DCI, and a value of an MCS index in the DCI during repetition transmission may be {28 to 31}.

Optionally, when the first device learns, through determining, that the time domain unit used for repetition transmission crosses a slot or is discontinuous in one slot, the first device notifies, by using the sent second indication information, the second device that the position of the start bit of the first bit sequence and the position of the end bit of the second bit sequence are contiguous in the coded bit sequence. For example, the first device notifies, by using a sent RRC message, the second device of how to select a position of a start point of the first bit sequence.

S1270: Determine that the position of the start bit of the first bit sequence and the position of the end bit of the second bit sequence are contiguous in the coded bit sequence.

Optionally, after receiving the second indication information, the second device determines that the position of the start bit of the first bit sequence and the position of the end bit of the second bit sequence are contiguous in the coded bit sequence. That the positions are contiguous indicates that the first bit sequence is seamlessly connected to the second bit sequence, and a to-be-sent bit sequence can be seamlessly and continuously selected backward from the coded bit sequence.

Optionally, the second device determines, according to a preset rule, that the position of the start bit of the first bit sequence and the position of the end bit of the second bit sequence are contiguous in the coded bit sequence.

After receiving the second indication information, the second device determines, based on the second indication information, that the position of the start bit of the first bit sequence and the position of the end bit of the second bit sequence are contiguous in the coded bit sequence. This achieves an actual effect that a case in which repetition transmission crosses a slot or is discontinuous in one slot does not exist.

S1280: Perform a plurality of uplink transmissions.

For example, after performing the plurality of uplink transmissions, the first device needs to receive the bit sequence in the four slots that is sent in the plurality of time domain units in S1240, and then performs channel decoding and demodulation corresponding to the bit sequence.

Because independent LDPC channel coding is performed on a second to-be-coded block that is not allocated a slot, when a quantity of bits of the second to-be-coded block is excessively small, a channel coding gain is small. It is determined that the first to-be-coded block includes the at least two second to-be-coded blocks, and channel coding and rate matching are performed on the first to-be-coded block, so that the channel coding gain can be increased, and a transmission capability can be improved. In addition, it is re-determined that the position of the start bit of the first bit sequence and the position of the end bit of the second bit sequence are contiguous in the coded bit sequence, so that an actual transmission bit rate can be reduced. Even if a case of crossing a slot boundary or an uplink data/downlink data switching point exists, a plurality of repetition transmissions can still ensure high accuracy of combination decoding.

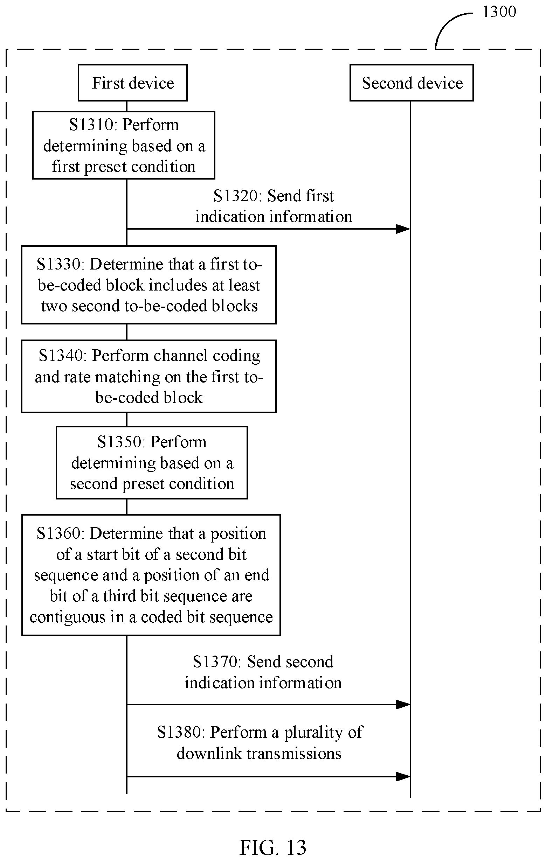

FIG. 13 is a schematic flowchart of another example of a data repetition transmission method applicable to this application. The method includes the following steps.

In the following embodiments, for differentiation and without loss of generality, a first device is used to represent a network device, and a second device is used to represent a terminal device.

It should be understood that the first device and the second device may alternatively be in other forms. For example, both the first device and the second device may be network devices, both the first device and the second device may be terminal devices, or the first device may be a terminal device and the second device may be a network device. This is not limited herein.

S1301: Perform determining based on a first preset condition.

For example, in a process in which the first device initially configures a time domain resource, a to-be-coded block used for repetition transmission is configured by the first device. The first device may determine, in a preset process, whether a minimum quantity of bits of a to-be-coded block in second to-be-coded blocks meets the first preset condition. Each to-be-coded block in the second to-be-coded blocks is a to-be-coded block transmitted in one time domain unit used for repetition transmission.

For a specific form of the first preset condition, refer to the description of S1210 in the method 1200. For brevity, details are not described herein again.

S1320: Send first indication information.

Optionally, when the first device learns, through calculation, that the minimum quantity of bits of the to-be-coded block in the second to-be-coded blocks is less than a third preset threshold, the first device notifies, by using the sent first indication information, the second device that the first device determines that a first to-be-coded block includes at least two second to-be-coded blocks.

For a specific form of the first indication information, refer to the description of S1220 in the method 1200. Details are not described herein again.

S1330: Determine that the first to-be-coded block includes the at least two second to-be-coded blocks.

For example, after receiving the first indication information, the second device determines that the first to-be-coded block includes the at least two second to-be-coded blocks.

For a specific form in which the first to-be-coded block includes the at least two second to-be-coded blocks, refer to the description of S1230 in the method 1200. For brevity, details are not described herein again.

S1340: Perform channel coding and rate matching on the first to-be-coded block.

For example, the first device performs LDPC coding and rate matching on the first to-be-coded block to obtain a sequence to be sent in a plurality of time domain units.

For a specific form of performing channel coding on the first to-be-coded block, refer to the description of S1240 in the method 1200. For brevity, details are not described herein again.

S1350: Perform determining based on a second preset condition.

Optionally, the first device determines, according to a preset rule or based on a second preset condition, that a position of a start bit of a first bit sequence and a position of an end bit of a second bit sequence are contiguous in a coded bit sequence.

For specific content of the second preset condition, refer to the description of S 1250 in the method 1200. For brevity, details are not described herein again.

S1360: Determine that the position of the start bit of the first bit sequence and the position of the end bit of the second bit sequence are contiguous in the coded bit sequence.

For example, the first device determines that the position of the start bit of the first bit sequence and the position of the end bit of the second bit sequence are contiguous in the coded bit sequence.

For specific content of determining the position of the start bit of the first bit sequence, refer to the description of S1270 in the method 1200. For brevity, details are not described herein again.

S1370: Send second indication information.

Optionally, when a quantity of time domain units for first transmission and/or a quantity of time domain units for second transmission meet/meets the second preset condition in S 1250, the first device notifies, by using the sent second indication information, the second device that the position of the start bit of the first bit sequence and the position of the end bit of the second bit sequence are contiguous in the coded bit sequence.

For specific content of the second indication information, refer to the description of S 1260 in the method 1200. Details are not described herein again.

S1380: Perform a plurality of downlink transmissions.

For example, the second device needs to receive the bit sequence in the four slots that is sent in the plurality of time domain units in S 1340, and then performs channel decoding and demodulation corresponding to the bit sequence.

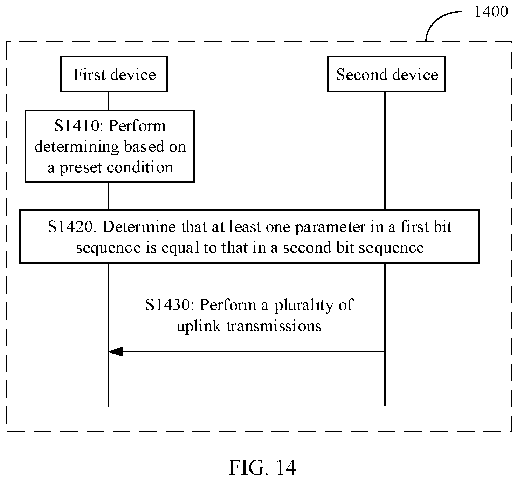

FIG. 14 is a schematic flowchart of another example of a repetition transmission method applicable to this application. The method includes the following steps.

In the following embodiments, for differentiation and without loss of generality, a first device is used to represent a network device, and a second device is used to represent a terminal device.

It should be understood that the first device and the second device may alternatively be in other forms. For example, both the first device and the second device may be network devices, both the first device and the second device may be terminal devices, or the first device may be a terminal device and the second device may be a network device. This is not limited herein.

S1410: Perform determining based on a preset condition.

For example, in a process in which the first device initially configures a time domain resource, basic parameters such as a start point and a length of a bit sequence transmitted in a slot unit that is configured for one repetition transmission are configured by the first device. The configured one repetition transmission includes first transmission and second transmission. The first transmission and the second transmission carry a same transport block. The second transmission is previous transmission of the first transmission. In other words, the second transmission is adjacent to the first transmission in terms of time and is prior to the first transmission. For example, when transmission crosses a switching point between uplink data and downlink data in one slot, the first transmission and the second transmission are discontinuous in one slot. Therefore, the first device may calculate, in a preset process, whether the transmission occupies at least two slots or is discontinuous in one slot.

Specifically, after learning the foregoing calculation result, the first device performs determining based on a condition, to be specific, determines whether a time domain unit for the first transmission meets a first preset condition or whether a time domain unit for the second transmission meets a second preset condition. For a specific determining process, refer to step S710. For brevity, details are not described herein again.

S1420: Determine that at least one parameter in a first bit sequence is equal to that in a second bit sequence.

For example, both the first device and the second device determine that at least one parameter in the first bit sequence is equal to that in the second bit sequence, where the parameter includes a power, precoding, and an antenna port.

When the first transmission and the second transmission occupy different slots or are discontinuous in one slot, data transmission is performed in a form of two independent repetition transmissions. Related parameter configurations of the first transmission and the second transmission are independent of each other. A receive end performs independent channel estimation on data in the two transmissions, and then separately demodulates and decodes the data in the two transmissions. However, because the data is transmitted in two independent transmissions, when the receive end performs channel estimation on data in each transmission, a small quantity of DMRS sequences are used. This results in inaccurate channel estimation. Therefore, it is determined that at least one parameter in the first bit sequence is equal to that in the second bit sequence, so that joint channel estimation can be performed after the two bit sequences are received, to improve accuracy of channel estimation. This improves accuracy of data demodulation and decoding of two transmissions. In an actual implementation process, because two data transmissions are independent and parameters are inconsistent, joint channel estimation may still fail. For example, when a power of the second transmission greatly changes, a random phase relative to the first transmission may be generated in the second transmission process, and the random phase is coupled on an estimated channel. Because the random phase cannot be eliminated, the channel estimation is inaccurate. When transmit antenna ports are not the same port, channels estimated by using a DMRS are also inconsistent. In addition, in data transmission, precoding parameters of the two transmissions should also be the same, and this helps the receive end perform joint channel estimation.

S1430: Perform a plurality of uplink transmissions.

For example, the second device performs a plurality of uplink repetition transmissions. For example, after receiving bit sequences in two repetition transmissions, the first device performs joint channel estimation corresponding to the bit sequences, and completes data demodulation and decoding operations.

When repetition transmission crosses a slot boundary or an uplink data/downlink data switching point, a time domain resource may be discontinuous. As a result, one repetition transmission is divided into two independent repetition transmissions. Because parameters of the two independent repetition transmissions are independent of each other, independent channel estimation is performed on the two repetition transmissions. Because a small quantity of DMRSs are used in each channel estimation, accuracy of channel estimation is reduced. Therefore, according to implementation of the method 1400, channel estimation can be performed based on all DMRS time domain units in two repetition transmissions. In comparison with channel estimation performed in each repetition transmission by using a DMRS time domain unit in the current repetition transmission, more DMRS time domain units can be used to improve accuracy of channel estimation, thereby improving reliability of data demodulation and decoding of transmission.

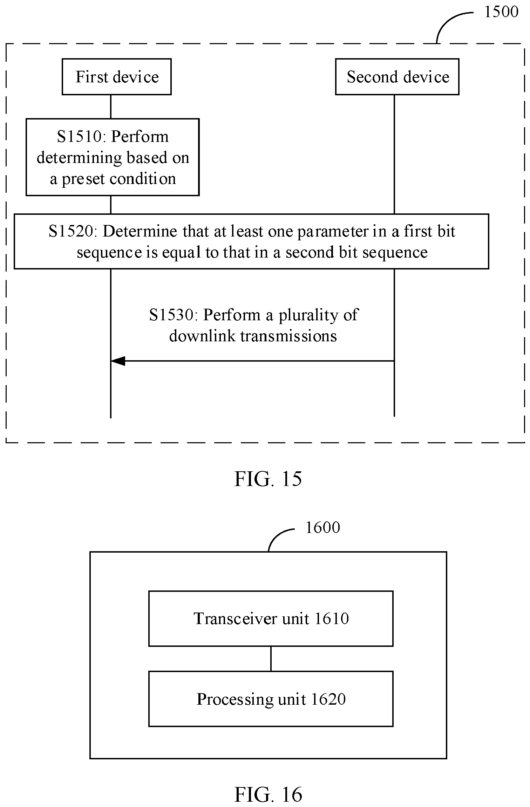

FIG. 15 is a schematic flowchart of another example of a repetition transmission method applicable to this application. The method includes the following steps.

In the following embodiments, for differentiation and without loss of generality, a first device is used to represent a network device, and a second device is used to represent a terminal device.

It should be understood that the first device and the second device may alternatively be in other forms. For example, both the first device and the second device may be network devices, both the first device and the second device may be terminal devices, or the first device may be a terminal device and the second device may be a network device. This is not limited herein.

S1510: Perform determining based on a preset condition.

For example, the first device performs determining based on the preset condition. For a specific determining process, refer to step S710. For brevity, details are not described herein again.

S1520: Determine that at least one parameter in a first bit sequence is equal to that in a second bit sequence.

For example, both the first device and the second device determine that at least one parameter in the first bit sequence is equal to that in the second bit sequence, where the parameter includes a power, precoding, and an antenna port. When first transmission and second transmission occupy different slots or are discontinuous in one slot, data transmission is performed in a form of two independent repetition transmissions. Related parameter configurations of the first transmission and the second transmission are independent of each other. A receive end performs independent channel estimation on data in the two transmissions, and then separately demodulates and decodes the data in the two transmissions. However, because the data is transmitted in two independent transmissions, when the receive end performs channel estimation on data in each transmission, a small quantity of DMRS sequences are used. This results in inaccurate channel estimation. Therefore, it is determined that at least one parameter in the first bit sequence is equal to that in the second bit sequence, so that joint channel estimation can be performed after the two bit sequences are received, to improve accuracy of channel estimation. This improves accuracy of data demodulation and decoding of two transmissions. In an actual implementation process, because two data transmissions are independent and parameters are inconsistent, joint channel estimation may still fail. For example, when a power of the second transmission greatly changes, a random phase relative to the first transmission may be generated in the second transmission process, and the random phase is coupled on an estimated channel. Because the random phase cannot be eliminated, the channel estimation is inaccurate. When transmit antenna ports are not the same port, channels estimated by using a DMRS are also inconsistent. In addition, in data transmission, precoding parameters of the two transmissions should also be the same, and this helps the receive end perform joint channel estimation.

S1530: Perform a plurality of downlink transmissions.

For example, the first device performs a plurality of downlink repetition transmissions. For example, after receiving bit sequences in two repetition transmissions, the second device performs joint channel estimation corresponding to the bit sequences, and completes data demodulation and decoding operations.

It is determined that at least one transmit parameter in the first bit sequence is equal to that in the second bit sequence. Channel estimation can be performed based on all DMRS time domain units in two repetition transmissions. In comparison with channel estimation performed in each repetition transmission by using a DMRS time domain unit in the current repetition transmission, more DMRS time domain units can be used to improve accuracy of channel estimation, thereby improving reliability of data demodulation and decoding of transmission.

The method provided in embodiments of this application is described above in detail with reference to FIG. 7 to FIG. 15. The following describes in detail an apparatus provided in embodiments of this application with reference to FIG. 16 to FIG. 19. It should be understood that descriptions of apparatus embodiments correspond to the descriptions of the method embodiments. Therefore, for content that is not described in detail, refer to the foregoing method embodiment. For brevity, details are not described herein again.

The foregoing mainly describes the solutions provided in embodiments of this application from the perspective of interaction between network elements. It may be understood that, to implement the foregoing functions, each network element, such as a transmit end device or a receive end device, includes a corresponding hardware structure and/or software module for performing each function. A person skilled in the art should be aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the transmit end device or the receive end device based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. An example in which each functional module is obtained through division based on each corresponding function is used below for description.

FIG. 16 is a schematic block diagram of a communication apparatus according to an embodiment of this application. The communication apparatus 1600 includes a transceiver unit 1610 and a processing unit 1620. The transceiver unit 1610 may implement a corresponding communication function, and the processing unit 1620 is configured to process data. The transceiver unit 1610 may also be referred to as a communication interface or a communication unit.

Optionally, the communication apparatus 1600 may further include a storage unit. The storage unit may be configured to store instructions and/or data. The processing unit 1620 may read the instructions and/or the data in the storage unit, so that the communication apparatus implements the foregoing method embodiments.

The communication apparatus 1600 may be configured to perform actions performed by the terminal device in the foregoing method embodiments. In this case, the communication apparatus 1600 may be the terminal device or a component that can be configured in the terminal device. The transceiver unit 1610 is configured to perform transceiving-related operations on a terminal device side in the foregoing method embodiments. The processing unit 1620 is configured to perform processing-related operations on the terminal device side in the foregoing method embodiments.

In a design, the communication apparatus 1600 is configured to perform actions performed by the terminal device in the embodiment shown in FIG. 7. The transceiver unit 1610 is configured to perform S730 and S740. The processing unit 1620 is configured to perform S720 and S740.

In another design, the communication apparatus 1600 is configured to perform actions performed by the terminal device in the embodiment shown in FIG. 10. The transceiver unit 1610 is configured to perform S1040 and S1050. The processing unit 1620 is configured to perform S 1020.

In another design, the communication apparatus 1600 is configured to perform actions performed by the terminal device in the embodiment shown in FIG. 12. The transceiver unit 1610 is configured to perform S1220, S1260, and S1280. The processing unit 1620 is configured to perform S1230, S1240, and S1270.

In another design, the communication apparatus 1600 is configured to perform actions performed by the terminal device in the embodiment shown in FIG. 13. The transceiver unit 1610 is configured to perform S1330, S1370, and S1380.

In another design, the communication apparatus 1600 is configured to perform actions performed by the terminal device in the embodiment shown in FIG. 14. The transceiver unit 1610 is configured to perform S1430. The processing unit 1620 is configured to perform S 1420.

In another design, the communication apparatus 1600 is configured to perform actions performed by the terminal device in the embodiment shown in FIG. 15. The transceiver unit 1610 is configured to perform S1530. The processing unit 1620 is configured to perform S 1520.

Alternatively, the communication apparatus 1600 may be configured to perform actions performed by the network device in the foregoing method embodiments. In this case, the communication apparatus 1600 may be the network device or a component that can be configured in the network device. The transceiver unit 1610 is configured to perform transceiving-related operations on a network device side in the foregoing method embodiments. The processing unit 1620 is configured to perform processing-related operations on the network device side in the foregoing method embodiments.

In a design, the communication apparatus 1600 is configured to perform actions performed by the network device in the embodiment shown in FIG. 7. The transceiver unit 1610 is configured to perform S730 and S750. The processing unit 1620 is configured to perform S710 and S720.

In a design, the communication apparatus 1600 is configured to perform actions performed by the network device in the embodiment shown in FIG. 10. The transceiver unit 1610 is configured to perform S1040 and S1050. The processing unit 1620 is configured to perform S1010, S1020, and S1030.

In a design, the communication apparatus 1600 is configured to perform actions performed by the network device in the embodiment shown in FIG. 12. The transceiver unit 1610 is configured to perform S1220, S1260, and S1280. The processing unit 1620 is configured to perform S1210 and S1250.

In another design, the communication apparatus 1600 is configured to perform actions performed by the network device in the embodiment shown in FIG. 13. The transceiver unit 1610 is configured to perform S1320, S1370, and S1380. The processing unit 1620 is configured to perform S1310, S1330, S1340, S1350, and S1360.

In another design, the communication apparatus 1600 is configured to perform actions performed by the network device in the embodiment shown in FIG. 14. The transceiver unit 1610 is configured to perform S1430. The processing unit 1620 is configured to perform S1410 and S 1420.

In another design, the communication apparatus 1600 is configured to perform actions performed by the network device in the embodiment shown in FIG. 15. The transceiver unit 1610 is configured to perform S1530. The processing unit 1620 is configured to perform S1510 and S 1520.

It should be understood that a specific process in which the units perform the foregoing corresponding steps has been described in detail in the foregoing method embodiments. For brevity, details are not described herein again.

The processing unit 1620 in the foregoing embodiment may be implemented by at least one processor or a processor-related circuit. The transceiver unit 1610 may be implemented by a transceiver or a transceiver-related circuit. The transceiver unit 1610 may also be referred to as a communication unit or a communication interface. The storage unit may be implemented by at least one memory.

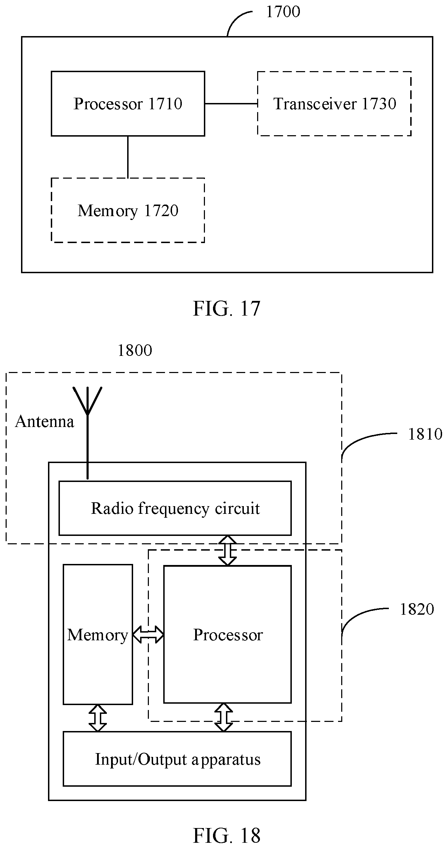

As shown in FIG. 17, an embodiment of this application further provides a communication apparatus 1700. The communication apparatus 1700 includes a processor 1710. The processor 1710 is coupled to a memory 1720. The memory 1710 is configured to store a computer program or instructions and/or data. The processor 1710 is configured to execute the computer program or the instructions and/or the data stored in the memory 1720, to perform the method in the foregoing method embodiment.

Optionally, the communication apparatus 1700 includes one or more processors 1710.

Optionally, as shown in FIG. 17, the communication apparatus 1700 may further include the memory 1720.

Optionally, the communication apparatus 1700 may include one or more memories 1720.

Optionally, the memory 1710 and the processor 1710 may be integrated together, or separately disposed.

Optionally, as shown in FIG. 17, the communication apparatus 1700 may further include a transceiver 1730. The transceiver 1730 is configured to receive and/or send a signal. For example, the processor 1710 is configured to control the transceiver 1730 to receive and/or send a signal.

In a solution, the communication apparatus 1700 is configured to implement operations performed by the terminal device in the foregoing method embodiments.

For example, the processor 1710 is configured to implement processing-related operations performed by the terminal device in the foregoing method embodiments, and the transceiver 1730 is configured to implement transceiving-related operations performed by the terminal device in the foregoing method embodiments.

In another solution, the communication apparatus 1700 is configured to implement operations performed by the network device in the foregoing method embodiments.

For example, the processor 1710 is configured to implement processing-related operations performed by the network device in the foregoing method embodiments, and the transceiver 1730 is configured to implement transceiving-related operations performed by the network device in the foregoing method embodiments.

An embodiment of this application further provides a communication apparatus 1800. The communication apparatus 1800 may be a terminal device or a chip. The communication apparatus 1800 may be configured to perform operations performed by the terminal device in the foregoing method embodiments.

When the communication apparatus 1800 is a terminal device, FIG. 18 is a simplified schematic diagram of a structure of the terminal device. As shown in FIG. 18, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store a software program and data. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 18 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the terminal device, and the processor that has a processing function may be considered as a processing unit of the terminal device.

As shown in FIG. 18, the terminal device includes a transceiver unit 1810 and a processing unit 1820. The transceiver unit 1810 may also be referred to as a transceiver, a transceiver apparatus, or the like. The processing unit 1820 may also be referred to as a processor, a processing board, a processing module, a processing apparatus, or the like.

Optionally, a component that is in the transceiver unit 1810 and that is configured to implement a receiving function may be considered as a receiving unit, and a component that is in the transceiver unit 1810 and that is configured to implement a sending function may be considered as a sending unit. That is, the transceiver unit 1810 includes the receiving unit and the sending unit. The transceiver unit sometimes may also be referred to as a transceiver, a transceiver circuit, or the like. The receiving unit sometimes may also be referred to as a receiver, a receiver circuit, or the like. The sending unit sometimes may also be referred to as a transmitter, a transmitter circuit, or the like.

For example, in an implementation, the processing unit 1820 is configured to perform processing actions on the terminal device side in FIG. 7. For example, the processing unit 1820 is configured to perform processing steps in steps S720 and S740 in FIG. 7, and the transceiver unit 1810 is configured to perform transceiving operations in steps S730 and S750 in FIG. 7.

For example, in another implementation, the processing unit 1820 is configured to perform processing actions on the terminal device side in FIG. 10. For example, the processing unit 1820 is configured to perform a processing step in step S1020 in FIG. 10, and the transceiver unit 1810 is configured to perform a transceiving operation in step S1040 in FIG. 10.

For example, in another implementation, the processing unit 1820 is configured to perform processing actions on the terminal device side in FIG. 12. For example, the processing unit 1820 is configured to perform processing steps in steps S1230, S1240, and S1270 in FIG. 12, and the transceiver unit 1810 is configured to perform transceiving operations in steps S1220 and S1260 in FIG. 12.

For example, in another implementation, the processing unit 1820 is configured to perform processing actions on the terminal device side in FIG. 13. For example, the transceiver unit 1810 is configured to perform transceiving operations in steps S1320, S1370, and S1380 in FIG. 13.

For example, in another implementation, the processing unit 1820 is configured to perform processing actions on the terminal device side in FIG. 14. For example, the transceiver unit 1810 is configured to perform a transceiving operation in step S1430 in FIG. 14.

For example, in another implementation, the processing unit 1820 is configured to perform processing actions on the terminal device side in FIG. 15. For example, the transceiver unit 1810 is configured to perform a transceiving operation in step S 1530 in FIG. 15.

It should be understood that FIG. 18 is merely an example instead of a limitation. The terminal device including the transceiver unit and the processing unit may not depend on the structure shown in FIG. 18.

When the communication apparatus 1800 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus 1900. The communication apparatus 1900 may be a network device or a chip. The communication apparatus 1900 may be configured to perform operations performed by the network device in the foregoing method embodiments.

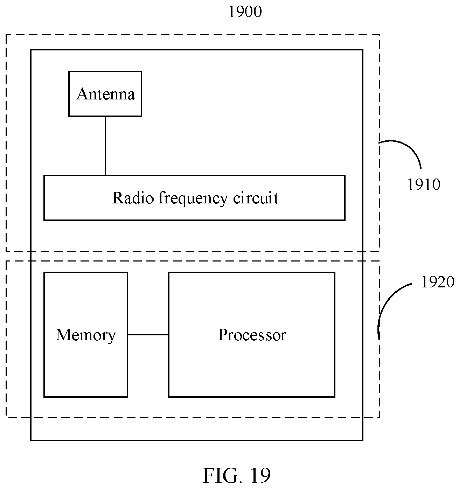

When the communication apparatus 1900 is a network device, for example, a base station, FIG. 19 is a simplified schematic diagram of a structure of a base station. The base station includes a part 1910 and a part 1920. The part 1910 is mainly configured to: receive and transmit a radio frequency signal, and perform conversion between the radio frequency signal and a baseband signal. The part 1920 is mainly configured to: perform baseband processing, control the base station, and the like. The part 1910 may be usually referred to as a transceiver unit, a transceiver machine, a transceiver circuit, a transceiver, or the like. The part 1920 is usually a control center of the base station, may be usually referred to as a processing unit, and is configured to control the base station to perform processing operations on the network device side in the foregoing method embodiments.

The transceiver unit in the part 1910 may also be referred to as a transceiver machine, a transceiver, or the like. The transceiver unit includes an antenna and a radio frequency circuit, where the radio frequency circuit is mainly configured to perform radio frequency processing. Optionally, a component that is in the part 1910 and that is configured to implement a receiving function may be considered as a receiving unit, and a component that is in the part 1910 and that is configured to implement a sending function may be considered as a sending unit. In other words, the part 1910 includes the receiving unit and the sending unit. The receiving unit may also be referred to as a receiver, a receiver circuit, or the like, and the sending unit may be referred to as a transmitter, a transmitter circuit, or the like.

The part 1920 may include one or more boards, and each board may include one or more processors and one or more memories. The processor is configured to read and execute a program in the memory to implement a baseband processing function and control the base station. If there are a plurality of boards, the boards may be interconnected to improve a processing capability. In an optional implementation, a plurality of boards may share one or more processors, a plurality of boards may share one or more memories, or a plurality of boards may simultaneously share one or more processors.

For example, in an implementation, the transceiver unit in the part 1910 is configured to perform transceiving-related steps performed by the network device in the embodiment shown in FIG. 7, and the part 1920 is configured to perform processing-related steps performed by the network device in the embodiment shown in FIG. 7.

For example, in another implementation, the transceiver unit in the part 1910 is configured to perform transceiving-related steps performed by the network device in the embodiment shown in FIG. 10, and the part 1920 is configured to perform processing-related steps performed by the network device in the embodiment shown in FIG. 10.

For example, in another implementation, the transceiver unit in the part 1910 is configured to perform transceiving-related steps performed by the network device in the embodiment shown in FIG. 12, and the part 1920 is configured to perform processing-related steps performed by the network device in the embodiment shown in FIG. 12.

For example, in another implementation, the transceiver unit in the part 1910 is configured to perform transceiving-related steps performed by the network device in the embodiment shown in FIG. 13, and the part 1920 is configured to perform processing-related steps performed by the network device in the embodiment shown in FIG. 13.

For example, in another implementation, the transceiver unit in the part 1910 is configured to perform transceiving-related steps performed by the network device in the embodiment shown in FIG. 14, and the part 1920 is configured to perform processing-related steps performed by the network device in the embodiment shown in FIG. 14.

For example, in another implementation, the transceiver unit in the part 1910 is configured to perform transceiving-related steps performed by the network device in the embodiment shown in FIG. 15, and the part 1920 is configured to perform processing-related steps performed by the network device in the embodiment shown in FIG. 15.

It should be understood that FIG. 19 is merely an example instead of a limitation. The network device including the transceiver unit and the processing unit may not depend on the structure shown in FIG. 19.

When the communication apparatus 1900 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used for implementing the method performed by the terminal device or the method performed by the network device in the foregoing method embodiments.

For example, when the computer program is executed by a computer, the computer is enabled to implement the method performed by the terminal device or the method performed by the network device in the foregoing method embodiment.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

It may be clearly understood by a person skilled in the art that, for convenience and brief description, for explanations and beneficial effects of related content in any communication apparatus provided above, refer to the corresponding method embodiment provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (which is also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device or the network device, or may be performed by a functional module that is in the terminal device or the network device and that can invoke and execute a program.

Aspects or features of this application may be implemented as a method, an apparatus, or a product that uses standard programming and/or engineering technologies. The term "product" used in this specification may cover a computer program that can be accessed from any computer-readable component, carrier, or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive), or a semiconductor medium (for example, a solid-state drive (solid state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable media" may include but is not limited to a wireless channel, and various other media that can store, include, and/or carry instructions and/or data.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or transistor logic device, or a discrete hardware component, the memory (a storage module) may be integrated into the processor.

It should be further noted that the memory described in this specification is intended to include, but is not limited to, these memories and any other memory of a suitable type.

In the several embodiments provided in this application, it should be understood that the disclosed apparatuses and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, or each of the units may exist alone physically, or two or more units may be integrated into one unit.

All or a part of the foregoing embodiments may be implemented by using software, hardware, firmware, or any combination thereof.

When software is used to implement embodiments, all or a part of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
determining that a position of a start bit of a first bit sequence and a position of an end bit of a second bit sequence are contiguous in a coded bit sequence, wherein the first bit sequence is a bit sequence in first transmission, the second bit sequence is a bit sequence in second transmission, the first transmission and the second transmission carry a same transport block, and the second transmission is previous transmission of the first transmission; and
receiving and/or sending the first bit sequence.

2. The method according to claim 1, wherein the method further comprises:
determining that at least one parameter in the first bit sequence is equal to that in the second bit sequence, wherein
the parameter comprises a transmit power, precoding, and an antenna port.

3. The method according to claim 1 or 2, wherein the determining that a position of a start bit of a first bit sequence and a position of an end bit of a second bit sequence are contiguous in a coded bit sequence comprises:
when a time domain unit for the first transmission meets a first preset condition, determining that the position of the start bit of the first bit sequence and the position of the end bit of the second bit sequence are contiguous in the coded bit sequence; or
when a time domain unit for the second transmission meets a second preset condition, determining that the position of the start bit of the first bit sequence and the position of the end bit of the second bit sequence are contiguous in the coded bit sequence.

4. The method according to claim 3, wherein the first preset condition is at least one of the following conditions:
an actual transmission bit rate of the first bit sequence in the first transmission is greater than or equal to a first preset threshold, and a ratio of a quantity of time domain units for the first transmission to a quantity of time domain units for one repetition transmission is greater than a second preset threshold, wherein the actual transmission bit rate of the first bit sequence in the first transmission is a product of a configured initial bit rate of a bit sequence transmitted in a time domain unit used for repetition transmission and a first ratio, the initial bit rate is a bit rate configured for the one repetition transmission, and the first ratio is a ratio of a configured quantity of time domain units for the one repetition transmission to the quantity of time domain units for the first transmission.

5. The method according to claim 3, wherein the second preset condition is at least one of the following conditions:
an actual transmission bit rate of the second bit sequence in the second transmission is greater than or equal to a third preset threshold, and a ratio of a quantity of time domain units for the second transmission to a configured quantity of time domain units for one repetition transmission is less than or equal to a fourth preset threshold, wherein the actual transmission bit rate of the second bit sequence in the second transmission is a product of a configured initial bit rate of a bit sequence transmitted in a time domain unit used for repetition transmission and a second ratio, the initial bit rate is a bit rate configured for the one repetition transmission, and the second ratio is a ratio of the quantity of time domain units for the second transmission to the configured quantity of time domain units for the one repetition transmission.

6. The method according to any one of claims 1 to 5, wherein the method further comprises:
sending indication information, wherein the indication information indicates that the position of the start bit of the first bit sequence and the position of the end bit of the second bit sequence are contiguous in the coded bit sequence.

7. The method according to claim 6, wherein the sending indication information comprises:
sending downlink control information DCI, wherein the DCI comprises the indication information.

8. The method according to claim 6, wherein the sending indication information comprises:
sending radio resource control RRC signaling, wherein the RRC signaling comprises the indication information.

9. A data transmission method, comprising:
determining that a position of a start bit of a first bit sequence and a position of an end bit of a second bit sequence are contiguous in a coded bit sequence, wherein the first bit sequence is a bit sequence in first transmission, the second bit sequence is a bit sequence in second transmission, the first transmission and the second transmission carry a same transport block, and the second transmission is previous transmission of the first transmission; and
receiving and/or sending the first bit sequence.

10. The method according to claim 9, wherein the method further comprises:
determining that at least one parameter in the first bit sequence is equal to that in the second bit sequence, wherein
the parameter comprises a power, precoding, and an antenna port.

11. The method according to claim 9 or 10, wherein the method further comprises:
receiving indication information, wherein the indication information indicates that the position of the start bit of the first bit sequence and the position of the end bit of the second bit sequence are contiguous in the coded bit sequence; and
the determining that a position of a start bit of a first bit sequence and a position of an end bit of a second bit sequence are contiguous in a coded bit sequence comprises:
determining, based on the indication information, that the position of the start bit of the first bit sequence and the position of the end bit of the second bit sequence are contiguous in the coded bit sequence.

12. The method according to claim 11, wherein the receiving indication information comprises:
receiving DCI, wherein the DCI comprises the indication information.

13. The method according to claim 11, wherein the receiving indication information comprises:
receiving RRC signaling, wherein the RRC signaling comprises the indication information.

14. A data transmission method, comprising:
determining that a first to-be-coded block comprises at least two second to-be-coded blocks, wherein each of the at least two second to-be-coded blocks is a to-be-coded block transmitted in one time domain unit used for repetition transmission;
performing channel coding and rate matching on the first to-be-coded block to obtain a bit sequence; and
receiving and/or sending the bit sequence.

15. The method according to claim 14, wherein when a quantity of bits of the second to-be-coded block meets a preset condition, channel coding and rate matching are performed on the first to-be-coded block to obtain the bit sequence.

16. The method according to claim 15, wherein the preset condition is that a maximum quantity of bits of a to-be-coded block in the at least two second to-be-coded blocks is less than or equal to a first preset threshold.

17. The method according to claim 15, wherein the preset condition is that a sum of quantities of bits of the at least two second to-be-coded blocks is less than or equal to a second preset threshold.

18. The method according to any one of claims 14 to 17, wherein the method further comprises:
sending indication information, wherein the indication information indicates that the bit sequence is a bit sequence obtained by performing channel coding and rate matching on the first to-be-coded block.

19. The method according to claim 18, wherein the sending indication information comprises:
sending DCI, wherein the DCI comprises the indication information.

20. The method according to claim 18, wherein the sending indication information comprises:
sending RRC signaling, wherein the RRC signaling comprises the indication information.

21. A data transmission method, comprising:
receiving indication information, wherein the indication information indicates that a bit sequence is a bit sequence obtained by performing channel coding and rate matching on a first to-be-coded block, the first to-be-coded block comprises at least two second to-be-coded blocks, and each of the at least two second to-be-coded blocks is a to-be-coded block transmitted in one time domain unit used for repetition transmission;
receiving and/or sending the bit sequence; and
performing channel decoding on the bit sequence based on the indication information.

22. The method according to claim 21, wherein the receiving indication information comprises:
receiving DCI, wherein the DCI comprises the indication information.

23. The method according to claim 21, wherein the receiving indication information comprises:
receiving RRC signaling, wherein the RRC signaling comprises the indication information.

24. A data transmission apparatus, comprising:
a processing module, configured to determine that a position of a start bit of a first bit sequence and a position of an end bit of a second bit sequence are contiguous in a coded bit sequence, wherein the first bit sequence is a bit sequence in first transmission, the second bit sequence is a bit sequence in second transmission, the first transmission and the second transmission carry a same transport block, and the second transmission is previous transmission of the first transmission; and
a transceiver module, configured to receive and/or send the first bit sequence.

25. The apparatus according to claim 24, wherein the processing module is specifically configured to:
determine that at least one parameter in the first bit sequence is equal to that in the second bit sequence, wherein
the parameter comprises a power, precoding, and an antenna port.

26. The apparatus according to claim 24 or 25, wherein the processing module is further specifically configured to:
when a time domain unit for the first transmission meets a first preset condition, determine that the position of the start bit of the first bit sequence and the position of the end bit of the second bit sequence are contiguous in the coded bit sequence; or
when a time domain unit for the second transmission meets a second preset condition, determine that the position of the start bit of the first bit sequence and the position of the end bit of the second bit sequence are contiguous in the coded bit sequence.

27. The apparatus according to claim 26, wherein an actual transmission bit rate of the first bit sequence in the first transmission is greater than or equal to a first preset threshold, and a ratio of a quantity of time domain units for the first transmission to a quantity of time domain units for one repetition transmission is greater than a second preset threshold, wherein the actual transmission bit rate of the first bit sequence in the first transmission is a product of a configured initial bit rate of a bit sequence transmitted in a time domain unit used for repetition transmission and a first ratio, the initial bit rate is a bit rate configured for the one repetition transmission, and the first ratio is a ratio of a configured quantity of time domain units for the one repetition transmission to the quantity of time domain units for the first transmission.

28. The apparatus according to claim 26, wherein an actual transmission bit rate of the second bit sequence in the second transmission is greater than or equal to a third preset threshold, and a ratio of a quantity of time domain units for the second transmission to a configured quantity of time domain units for one repetition transmission is less than or equal to a fourth preset threshold, wherein the actual transmission bit rate of the second bit sequence in the second transmission is a product of a configured initial bit rate of a bit sequence transmitted in a time domain unit used for repetition transmission and a second ratio, the initial bit rate is a bit rate configured for the one repetition transmission, and the second ratio is a ratio of the quantity of time domain units for the second transmission to the configured quantity of time domain units for the one repetition transmission.

29. The apparatus according to any one of claims 24 to 28, wherein the transceiver module is specifically configured to:
send indication information, wherein the indication information indicates that the position of the start bit of the first bit sequence and the position of the end bit of the second bit sequence are contiguous in the coded bit sequence.

30. The apparatus according to claim 29, wherein the transceiver module is further specifically configured to:
send DCI, wherein the DCI comprises the indication information.

31. The apparatus according to claim 29, wherein the transceiver module is further specifically configured to:
send RRC signaling, wherein the RRC signaling comprises the indication information.

32. A data transmission apparatus, comprising:
a processing module, configured to determine that a position of a start bit of a first bit sequence and a position of an end bit of a second bit sequence are contiguous in a coded bit sequence, wherein the first bit sequence is a bit sequence in first transmission, the second bit sequence is a bit sequence in second transmission, the first transmission and the second transmission carry a same transport block, and the second transmission is previous transmission of the first transmission; and
a transceiver module, configured to receive and/or send the first bit sequence.

33. The apparatus according to claim 32, wherein at least one parameter in the first bit sequence is equal to that in the second bit sequence; and
the parameter comprises a power, precoding, and an antenna port.

34. The apparatus according to claim 32 or 33, wherein the transceiver module is specifically configured to:
receive indication information, wherein the indication information indicates that the position of the start bit of the first bit sequence and the position of the end bit of the second bit sequence are contiguous in the coded bit sequence; and
the determining that a position of a start bit of a first bit sequence and a position of an end bit of a second bit sequence are contiguous in a coded bit sequence comprises:
determining, based on the indication information, that the position of the start bit of the first bit sequence and the position of the end bit of the second bit sequence are contiguous in the coded bit sequence.

35. The apparatus according to claim 34, wherein the transceiver module is further specifically configured to:
receive DCI, wherein the DCI comprises the indication information.

36. The apparatus according to claim 34, wherein the transceiver module is further specifically configured to:
receive RRC signaling, wherein the RRC signaling comprises the indication information.

37. A data transmission apparatus, comprising:
a processing module, configured to determine that a first to-be-coded block comprises at least two second to-be-coded blocks, wherein each of the at least two second to-be-coded blocks is a to-be-coded block transmitted in one time domain unit used for repetition transmission, wherein
the processing module is further configured to perform channel coding and rate matching on the first to-be-coded block to obtain a bit sequence; and
a transceiver module, configured to receive and/or send the bit sequence.

38. The apparatus according to claim 37, wherein the processing module is further specifically configured to:
when a quantity of bits of the second to-be-coded block meets a preset condition, perform channel coding and rate matching on the first to-be-coded block to obtain the bit sequence.

39. The apparatus according to claim 38, wherein the processing module is further specifically configured to:
when a minimum quantity of bits of a to-be-coded block in the at least two second to-be-coded blocks is less than or equal to a first preset threshold, perform channel coding and rate matching on the first to-be-coded block to obtain the bit sequence.

40. The apparatus according to claim 38, wherein the processing module is further specifically configured to:
when a sum of quantities of bits of the at least two second to-be-coded blocks is less than or equal to a second preset threshold, perform channel coding and rate matching on the first to-be-coded block to obtain the bit sequence.

41. The apparatus according to any one of claims 37 to 40, wherein the transceiver module is specifically configured to:
send indication information, wherein the indication information indicates that the bit sequence is a bit sequence obtained by performing channel coding and rate matching on the first to-be-coded block.

42. The apparatus according to claim 41, wherein the transceiver module is further specifically configured to:
send downlink control information DCI, wherein the DCI comprises the indication information.

43. The apparatus according to claim 41, wherein the transceiver module is further specifically configured to:
send RRC signaling, wherein the RRC signaling comprises the indication information.

44. A data transmission apparatus, comprising:
a transceiver module, configured to receive indication information, wherein the indication information indicates that a bit sequence is a bit sequence obtained by performing channel coding and rate matching on a first to-be-coded block, the first to-be-coded block comprises at least two second to-be-coded blocks, and each of the at least two second to-be-coded blocks is a to-be-coded block transmitted in one time domain unit used for repetition transmission, wherein
the transceiver module is further configured to receive and/or send the bit sequence; and
a processing module, configured to perform channel decoding on the bit sequence based on the indication information.

45. The apparatus according to claim 44, wherein the transceiver module is specifically configured to:
receive downlink control information DCI, wherein the DCI comprises the indication information.

46. The apparatus according to claim 44, wherein the transceiver module is specifically configured to:
receive RRC signaling, wherein the RRC signaling comprises the indication information.

47. A data transmission apparatus, comprising:
a memory, configured to store computer instructions; and
a processor, configured to execute the computer instructions stored in the memory, so that the data transmission apparatus performs the method according to any one of claims 1 to 8, the method according to any one of claims 9 to 13, the method according to any one of claims 14 to 20, or the method according to any one of claims 21 to 23.

48. A computer-readable storage medium, wherein the computer-readable storage medium stores a computer program, and when the computer program is executed by a data transmission apparatus, the data transmission apparatus is enabled to perform the method according to any one of claims 1 to 8, the method according to any one of claims 9 to 13, the method according to any one of claims 14 to 20, or the method according to any one of claims 21 to 23.
